(19) Europäisches Patentamt
European Patent Office
Office européen des brevets

(11) **EP 4 224 652 A1**

(12) **EUROPEAN PATENT APPLICATION**
published in accordance with Art. 153(4) EPC

(43) Date of publication:
**09.08.2023 Bulletin 2023/32**

(21) Application number: **21875337.4**

(22) Date of filing: **21.09.2021**

(51) International Patent Classification (IPC):
**H02J 3/01** *(2006.01)*        **H02J 3/16** *(2006.01)*

(52) Cooperative Patent Classification (CPC):
**H02J 3/01; H02J 3/16; H02J 3/38; H02J 13/00;**
Y02E 40/30; Y02E 40/40; Y02E 40/70; Y04S 10/12

(86) International application number:
**PCT/JP2021/034646**

(87) International publication number:
**WO 2022/071035 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020164996**

(71) Applicant: **DAIKIN INDUSTRIES, LTD.
Osaka-shi, Osaka 530-0001 (JP)**

(72) Inventors:
• **KOUNO, Masaki
  Osaka-shi, Osaka 5300001 (JP)**
• **KAWASHIMA, Reiji
  Osaka-shi, Osaka 5300001 (JP)**
• **OHTA, Keisuke
  Osaka-shi, Osaka 5300001 (JP)**
• **KOJIMA, Hiroki
  Osaka-shi, Osaka 5300001 (JP)**
• **MAEDA, Toshiyuki
  Osaka-shi, Osaka 5300001 (JP)**

(74) Representative: **Hoffmann Eitle
Patent- und Rechtsanwälte PartmbB
Arabellastraße 30
81925 München (DE)**

(54) **POWER CONTROL SYSTEM AND APPARATUS**

(57)     [Object] As compared with the case where a device supplies power to an electric line regardless of an index regarding the capacity of power in an electric path, the device may supply the power to the electric line according to the content of supply suitable for the electric path.

[Solution] A power control system includes an acquisition unit that acquires capacity information on capacity of power in an electric path through which power supplied from a power plant passes before the power is received by a device, and a control unit that performs control on, based on the capacity information, supply of power from the device to an electric line through which the power supplied from the power plant passes before the power is received by the device.

FIG.7

## Description

Technical Field

The present disclosure relates to a power control system and a device.

Background Art

PTL 1 describes that a control gain determination unit detects a fluctuation range of an n-th order harmonic current component and determines a control gain so as to keep the fluctuation range within the range that does not affect a system voltage.

Citation List

Patent Literature

PTL 1: Japanese Unexamined Patent Publication No. 2005-245117

Summary of Invention

Technical Problem

Power may be supplied from a device to an electric line. Here, when the power is supplied from the device to the electric line regardless of an index regarding the capacity of power in an electric path through which the power supplied from the device passes, the power may be supplied according to the content unsuitable for the electric path.

The present disclosure has an object to supply the power from the device to the electric line according to the content of supply suitable for the electric path, as compared with the case where the power is supplied from the device to the electric line regardless of the index regarding the capacity of power in the electric path.

Solution to Problem

A power control system according to the present disclosure is a power control system including an acquisition unit that acquires capacity information on a capacity of power in an electric path through which power supplied from a power plant passes before the power is received by a device, and a control unit that performs control on, based on the capacity information, supply of power from the device to an electric line through which the power supplied from the power plant passes before the power is received by the device. In this case, as compared with the case where the device supplies the power to the electric line regardless of the index regarding the capacity of power in the electric path, the device may supply the power to the electric line according to the content of supply suitable for the electric path.

Here, the control unit may limit supply of power from the device to the electric line based on the capacity information. In this case, as compared with the case where the supply of power from the device is not limited, it is possible to suppress the occurrence of a failure in the electric path.

Furthermore, a capability information acquisition unit may be further included to acquire capability information on a capability of the device to supply power, and the control unit may perform the control based on the capacity information and the capability information. In this case, as compared with the case where the device supplies the power to the electric line regardless of the index regarding the capability of the device to supply power, the device may supply the power to the electric line according to the content of supply suitable for the device.

Further, the electric path may include a first electric path and a second electric path provided closer to a power reception side than the first electric path, and the control unit may perform control on supply of power from the device to the first electric path based on first capacity information on the capacity in the first electric path and second capacity information on the capacity in the second electric path. In this case, as compared with the case where the power is supplied to the electric line regardless of the index regarding the capacity of power in the electric path, the device may supply the power to the electric line according to the content of supply suitable for the electric path through which the power from the device passes before the power is supplied to the electric line.

Furthermore, the control unit may perform control on supply of power from the device to the first electric path based on a condition set for the first capacity information and a condition set for the second capacity information. In this case, the device may supply the power to the electric line according to the content of supply corresponding to the index regarding the capacity of power in the first electric path and the index regarding the capacity of power in the second electric path.

Furthermore, the second electric path may be provided in a facility where the device is provided, the condition set for the first capacity information may be set for necessary power to be supplied to the first electric path, and the condition set for the second capacity information may be set for a capability of the device to supply power. In this case, as compared with the case where the device supplies the power to the electric line unconditionally with regard to the capacity of power in the electric path, the device may supply the power to the electric line according to the content of supply suitable for the electric path and the device.

Furthermore, the electric path may include a first electric path and a second electric path different from the first electric path, the device may include a first device configured to receive power not via the second electric path but via the first electric path, and a second device configured to receive power not via the first electric path but via the second electric path, and the control unit may perform control on a relation between supply of power by the first device and supply of power by the second device based on first capacity information on the capacity in the first electric path and second capacity information on the capacity in the second electric path. In this case, as compared with the case where the relation of the supply of power is determined regardless of the index regarding the capacity of power in the electric path, the relation of the supply of power may be determined according to the content of supply suitable for the electric path.

Furthermore, a capability information acquisition unit that acquires capability information on a capability of the device to supply power may be further included, and the control unit may perform control on the relation based on first capability information on a capability of the first device to supply power and second capability information on a capability of the second device to supply power. In this case, as compared with the case where the relation of the supply of power is determined regardless of the index regarding the capability of the device to supply power, the relation of the supply of power may be determined according to the content of the supply suitable for the device.

Furthermore, the first electric path may be provided in a facility where the first device is provided, and the second electric path may be provided in a facility where the second device is provided. In this case, the relation of the supply of power may be determined according to the relation suitable for the index regarding the capacity of power in the electric path and the index regarding the capability of the device to supply power.

Further, the acquisition unit may acquire reception-side capacity information on a capacity of power in a reception-side electric path provided closer to a power reception side than the device, and the control unit may perform control on supply of power from the device to the electric line based on the capacity information and the reception-side capacity information. In this case, as compared with the case where the device supplies the power to the electric line regardless of the index regarding the capacity of power in the reception-side electric path, the device may supply the power to the electric line according to the content of supply suitable for the reception-side electric path.

Moreover, from another viewpoint, a device according to the present disclosure is a device including an acquisition unit that acquires capacity information on a capacity of power in an electric path through which power supplied from a power plant passes before the power is received by the device, and a control unit that performs control on, based on the capacity information, supply of power to an electric line through which the power supplied from the power plant passes before the power is received by the device. In this case, as compared with the case where the device supplies the power to the electric line regardless of the index regarding the capacity of power in the electric path, the device may supply the power to the electric line according to the content of supply suitable for the electric path.

Brief Description of Drawings

[FIG. 1] FIG. 1 is a diagram illustrating an example of a power control system according to the present embodiment.
[FIG. 2] FIG. 2 is a diagram illustrating a hardware configuration of a control server and a management server.
[FIG. 3] FIG. 3 is a diagram illustrating a functional configuration of an HPS.
[FIG. 4] FIG. 4 is a diagram illustrating a functional configuration of the control server.
[FIG. 5] FIG. 5 is a diagram illustrating a specific electric path management table.
[FIG. 6] FIG. 6 is a diagram illustrating an HPS management table.
[FIG. 7] FIG. 7 is a flowchart illustrating a flow of an adjustment amount calculation process.
[FIG. 8] FIG. 8 is a diagram illustrating an overall configuration of the power control system according to a modification.
[FIG. 9] FIG. 9 is a diagram illustrating a specific electric path management table according to the modification.

Description of Embodiments

An embodiment will be described below with reference to the accompanying drawings.

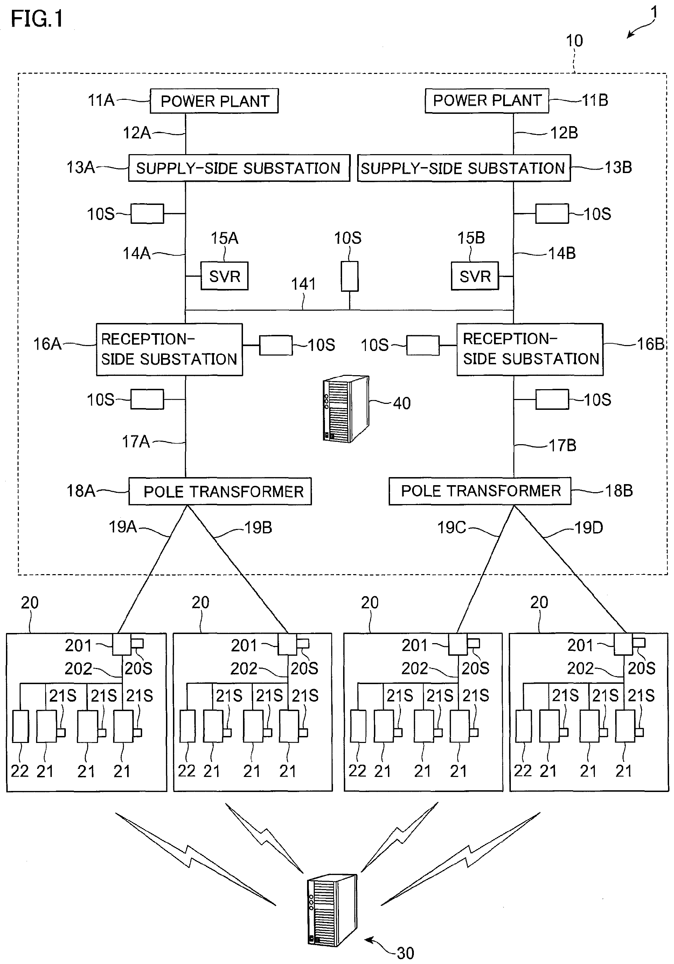

FIG. 1 is a diagram illustrating an example of a power control system 1 according to the present embodiment.
The power control system 1 is a system that controls apparent power.
The power control system 1 includes a power system 10, a plurality of power consumption facilities 20, a control server 30, and a management server 40.
The power system 10 is a system in which a facility is provided to supply the power to a power demander. The power system 10 includes a power plant 11, a transmission line 12, a supply-side substation 13, a supply-side distribution line 14, a connection line 141, an automatic voltage regulator (SVR: Step Voltage Regulator) 15, a reception-side substation 16, a reception-side distribution line 17, a pole transformer 18, and a demander-side distribution line 19.
The power plant 11 is a facility that generates power. Examples of the power plant 11 include a thermal power plant, a hydraulic power plant, a nuclear power plant, a solar power plant, a wind power plant, and a geothermal power plant. However, the power plant 11 may be any facility that generates power as described above and is not limited to the listed examples.

The power system 10 includes a plurality of the power plants 11. The illustrated example includes the two power plants 11 including a power plant 11A and a power plant 11B. Furthermore, the power plant 11A and the power plant 11B may be simply referred to as the power plants 11 when they are not distinguished from each other in particular in the description.

The transmission line 12 is a line to flow the current forming the power generated by the power plant 11. The transmission line 12 is provided from the power plant 11 to the supply-side substation 13.

The power system 10 includes a plurality of the transmission lines 12. The illustrated example includes the two transmission lines 12 including a transmission line 12A and a transmission line 12B. Furthermore, the transmission line 12A and the transmission line 12B may be simply referred to as the transmission lines 12 when they are not distinguished from each other in particular in the description.

The supply-side substation 13 is a facility that converts the voltage. The supply-side substation 13 is provided closer to the power supply side than the reception-side substation 16. According to the present embodiment, the facility located closest to the power supply side is the power plant 11. Furthermore, the facility located closest to the power reception side is the power consumption facility 20.

The supply-side substation 13 converts the voltage supplied through the transmission line 12. Examples of the supply-side substation 13 include a substation that converts a voltage of 500000 V into 154000 V, a substation that converts a voltage of 154000 V into 66000 V, and a substation that converts a voltage of 66000 V into 22000 V

The power system 10 includes a plurality of the supply-side substations 13. The illustrated example includes the two supply-side substations 13 including a supply-side substation 13A and a supply-side substation 13B. Furthermore, the supply-side substation 13A and the supply-side substation 13B may be simply referred to as the supply-side substations 13 when they are not distinguished from each other in particular in the description.

The supply-side distribution line 14 is a line to flow the current generated by applying the voltage converted by the supply-side substation 13. The supply-side distribution line 14 is provided from the supply-side substation 13 to the reception-side substation 16. Furthermore, the supply-side distribution line 14 is provided closer to the power supply side than the reception-side distribution line 17.

The power system 10 includes a plurality of the supply-side distribution lines 14. The illustrated example includes the two supply-side distribution lines 14 including a supply-side distribution line 14A and a supply-side distribution line 14B. The current forming the power generated by the power plant 11A flows through the supply-side distribution line 14A. Further, the current forming the power generated by the power plant 11B flows through the supply-side distribution line 14B. Furthermore, the supply-side distribution line 14A and the supply-side distribution line 14B may be simply referred to as the supply-side distribution lines 14 when they are not distinguished from each other in particular in the description.

The connection line 141 is a line connecting the supply-side distribution line 14A and the supply-side distribution line 14B. According to the present embodiment, the current forming the power generated by the power plant 11A may flow to the supply-side distribution line 14B via the supply-side distribution line 14A and the connection line 141. Further, the current forming the power generated by the power plant 11B may flow to the supply-side distribution line 14A via the supply-side distribution line 14B and the connection line 141. In other words, the connection line 141 may supply the power from the supply-side distribution line 14B to the supply-side distribution line 14A and may supply the power from the supply-side distribution line 14A to the supply-side distribution line 14B.

The SVR 15 regulates the voltage supplied to the supply-side distribution line 14. More Specifically, the SVR 15 detects the voltage supplied to the supply-side distribution line 14. Then, when the detected voltage does not fall within a predetermined range, the SVR 15 regulates the voltage such that the voltage falls within the predetermined range.

The power system 10 includes a plurality of the SVRs 15. The illustrated example includes the two SVRs 15 including an SVR 15A and an SVR 15B. Furthermore, the SVR 15A and the SVR 15B may be simply referred to as the SVRs 15 when they are not distinguished from each other in particular in the description.

Further, the power control system 1 may include a reactive power compensation device (SVC: Static Var Compensator) instead of the SVR 15. The SVC regulates the voltage supplied to the supply-side distribution line 14. More specifically, the SVC continuously regulates the reactive power from the lagging direction to the leading direction so that the voltage in the supply-side distribution line 14 falls within the predetermined range. Further, the power control system 1 may include both the SVR 15 and the SVC.

The reception-side substation 16 is a facility that converts the voltage supplied through the supply-side distribution line 14. Examples of the reception-side substation 16 include a substation that converts the supplied voltage into 6600 V

The power system 10 includes a plurality of the reception-side substations 16. The illustrated example includes the two reception-side substations 16 including a reception-side substation 16A and a reception-side substation 16B. The reception-side substation 16A converts the voltage supplied through the supply-side distribution line 14A. Furthermore, the reception-side substation 16B converts the voltage supplied through the supply-side distribution line 14B. Further, the reception-side substation 16A and the reception-side substation 16B may be simply referred to as the reception-side substations 16 when they are not distinguished from each other in particular in the description.

The reception-side distribution line 17 is a line to flow the current generated by applying the voltage converted by the reception-side substation 16. The reception-side distribution line 17 is provided from the reception-side substation 16 to the pole transformer 18. Furthermore, according to the present embodiment, the supply-side distribution line 14, the connection line 141, and the reception-side distribution line 17 may be simply referred to as "electric lines" when they are not distinguished from each other in particular in the description.

The power system 10 includes a plurality of the reception-side distribution lines 17. The illustrated example includes the two reception-side distribution lines 17 including a reception-side distribution line 17A and a reception-side distribution line 17B. The current generated by applying the voltage converted by the reception-side substation 16A flows through the reception-side distribution line 17A. Further, the current generated by applying the voltage converted by the reception-side substations 16B flows through the reception-side distribution line 17B. Further, the reception-side distribution line 17A and the reception-side distribution line 17B may be simply referred to as the reception-side distribution lines 17 when they are not distinguished from each other in particular in the description.

The pole transformer 18 is a facility that converts the voltage supplied through the reception-side distribution line 17. Examples of the pole transformer 18 include a transformer that converts a voltage of 6600 V to 200 V and a transformer that converts a voltage of 6600 V to 100 V

The power system 10 includes a plurality of the pole transformers 18. The illustrated example includes the two pole transformers 18 including a pole transformer 18A and a pole transformer 18B. The pole transformer 18A converts the voltage supplied through the reception-side distribution line 17A. Further, the pole transformer 18B converts the voltage supplied through the reception-side distribution line 17B. Furthermore, the pole transformer 18A and the pole transformer 18B may be simply referred to as the pole transformers 18 when they are not distinguished from each other in particular in the description.

The demander-side distribution line 19 is a line to flow the current generated when the voltage converted by the pole transformer 18 is applied. The power system 10 includes a plurality of the demander-side distribution lines 19. More specifically, the demander-side distribution line 19 is provided for each of the power consumption facilities 20. Each of the demander-side distribution lines 19 is provided from the pole transformer 18 to the power consumption facility 20. The illustrated example includes the four demander-side distribution lines 19 including a demander-side distribution line 19A to a demander-side distribution line 19D. Furthermore, the demander-side distribution line 19A to the demander-side distribution line 19D may be simply referred to as the demander-side distribution lines 19 when they are not distinguished from each other in particular in the description.

Further, the power system 10 includes a plurality of power sensors 10S. The power sensor 10S is coupled to the supply-side distribution line 14. More specifically, the power sensor 10S is coupled to a portion of the supply-side distribution line 14 closer to the power supply side than the SVR 15. Further, the power sensor 10S is coupled to the connection line 141. Further, the power sensors 10S are coupled to the reception-side substations 16, respectively. Moreover, the power sensors 10S are coupled to the reception-side distribution lines 17, respectively.

The power sensor 10S detects a parameter regarding the apparent power in the coupled electric line. The parameter regarding the apparent power is a parameter that affects the apparent power. Examples of the parameter regarding the apparent power include apparent power, reactive power, harmonic voltage, current, power factor, and apparent power amount and reactive power amount in a predetermined period. The current as a parameter regarding the apparent power includes a harmonic current. Furthermore, the harmonic voltage or the harmonic current may be a harmonic voltage or a harmonic current of a specific order. Examples of the specific order include the fifth-order harmonic. Further, examples of the parameter regarding the apparent power include a total harmonic distortion (THD: Total Harmonic Distortion) of the current and the THD of the voltage. Here, the THD of the current is calculated from Equation (1) below. Moreover, the THD of the voltage is calculated from Equation (2) below.

$$THD = \sqrt{\sum_{n=2}^{40} \left(\frac{I_n}{I_1}\right)^2} \quad \cdots (1)$$

$$THD = \sqrt{\sum_{n=2}^{40} \left(\frac{V_n}{V_1}\right)^2} \quad \cdots (2)$$

In Equation (1) above, $I_1$ is a fundamental current. Furthermore, $I_n$ is an n-th harmonic current.

In Equation (2), Vi is a fundamental voltage. Further, $V_n$ is an n-th harmonic voltage.

For example, the power sensor 10S detects the above-described parameter regarding the apparent power at predetermined time intervals. Hereinafter, the parameter regarding the apparent power may be referred to as power information. Examples of the power information include information indicating a parameter regarding the apparent power. Further, the power information may be information indicating the waveform of the current.

Further, the predetermined time may be any time, but is for example 60 seconds. The target facility whose power information is detected by the power sensor 10S is an electric line among the facilities to which the power sensor 10S is coupled. When detecting the power information, the power sensor 10S transmits the detected power information to the management server 40 together with the electric line identification information for identifying the electric line to be detected.

Further, the power sensor 10S according to the present embodiment detects the power, the power amount, or the power amount in a predetermined time in the coupled facility. Furthermore, the power, the power amount, and the power amount in the predetermined time may be collectively referred to as "power" in a simple manner when they are not distinguished from each other in particular in the description. Furthermore, the power in the facility is power passing through the facility. Hereinafter, the information indicating the power in the facility may be referred to as facility power information. The target facilities whose facility power information is detected by the power sensor 10S are all the facilities to which the power sensor 10S is coupled.

The power sensor 10S detects the facility power information on the coupled facility, for example, at predetermined time intervals. The predetermined time may be any time, but is for example 60 seconds. When detecting the facility power information, the power sensor 10S transmits the detected facility power information to the management server 40 together with facility identification information for identifying the facility to be detected.

The numbers of the power plants 11, the transmission lines 12, the supply-side substations 13, the pole transformers 18, and the demander-side distribution lines 19 provided in the power system 10 are not limited to the illustrated example. The numbers of the power plants 11, the transmission lines 12, the supply-side substations 13, the pole transformers 18, and the demander-side distribution lines 19 provided in the power system 10 may be larger or smaller than that in the illustrated example. Furthermore, when the number of target facilities among the power plants 11, the transmission lines 12, the supply-side substations 13, the pole transformers 18, and the demander-side distribution lines 19 is smaller than that in the illustrated example, the target facilities may be omitted. As an example, the power generated by the power plant 11 may be supplied to the power consumption facility 20 through the reception-side distribution line 17 and not through the pole transformer 18 and the demander-side distribution line 19.

Further, the numbers of the supply-side distribution lines 14, the reception-side substations 16, and the reception-side distribution lines 17 are not limited to the illustrated example. The power system 10 may include the supply-side distribution lines 14, the reception-side substations 16, and the reception-side distribution lines 17 that are larger in number than those illustrated in the drawing. Further, the power sensor 10S may be provided for each of the supply-side distribution lines 14, the power sensor 10S may be provided for each of the reception-side substations 16, or the power sensor 10S may be provided for each of the reception-side distribution lines 17.

Further, the power information detected by the power sensor 10S is not limited to one type of parameter regarding the apparent power. The power sensor 10S may detect a plurality of types of parameters among the above-described parameters. Then, the power information indicating each of the plurality of types of parameters detected may be transmitted to the management server 40. Further, the power sensor 10S may be provided for each type of parameter to be detected.

The power consumption facility 20 is a facility that receives and consumes the power supplied from the power plant 11 through the demander-side distribution line 19. Each of the power consumption facilities 20 includes a power reception facility 201, an in-facility line 202, and a facility power sensor 20S.

The power reception facility 201 receives the power supplied from the power system 10. Furthermore, the power reception facility 201 converts the voltage of the received power into a voltage used in the facility inside the power consumption facility 20. Examples of the power reception facility 201 include a switchboard and a distribution board.

The in-facility line 202 is a line to flow the current forming the power received by the power reception facility 201. The in-facility line 202 is provided from the power reception facility 201 to each device that consumes the power in the power consumption facility 20.

The facility power sensor 20S detects the facility power information that is information indicating the power in the power reception facility 201, for example, at predetermined time intervals. The predetermined time may be any time, but is for example 60 seconds. When detecting the facility power information, the facility power sensor 20S transmits the detected facility power information to the control server 30 together with the facility identification information for identifying the power reception facility 201 to be detected.

Furthermore, each of the power consumption facilities 20 includes a plurality of heat pump systems (HPS: Heat Pump System) 21 and a load 22.

The HPS 21, which is an example of the device, uses the power received from the power system 10 to adjust the temperature and humidity. Examples of the target to be adjusted by the HPS 21 include the temperature and humidity of the space in the power consumption facility 20. Further, examples of the target to be adjusted by the HPS 21 include the temperature of the liquid provided in the power consumption facility 20.

Furthermore, the HPS 21 according to the present embodiment may supply the current. The HPS 21 supplies the current to adjust the above parameters regarding the apparent power in the HPS 21. Further, the HPS 21 may supply the current to the electric line. The HPS 21 supplies the current to the electric line to adjust the above parameters regarding the apparent power in the electric line.

An example of the technique for adjusting the parameter regarding the apparent power in the electric line by the HPS 21 will be described. When the harmonic current of a specific order occurs in the electric line, the HPS 21 supplies, to the electric line, the current having a phase that cancels the harmonic current of the specific order to reduce the harmonic current of the specific order in the electric line.

Another example of the technique for adjusting the parameter regarding the apparent power in the electric line by the HPS 21 will be described. When the reactive power occurs in the electric line, the HPS 21 supplies the current to the electric line to reduce the reactive power in the electric line. Further, as the reactive power in the electric line decreases, the power factor in the electric line is improved.

As described above, according to the present embodiment, the parameter regarding the apparent power in the electric line is adjusted by using the HPS 21. Further, the HPS 21 adjusts the parameter regarding the apparent power in the HPS 21 by using a technique similar to that for adjusting the electric line. Here, as the parameter regarding the apparent power changes, the apparent power also changes. Therefore, in a broad sense, the adjustment of each of the above-described parameters regarding the apparent power is regarded as the adjustment of the apparent power. Hereinafter, each of the parameters regarding the apparent power to be adjusted may be collectively referred to as "apparent power".

Examples of the HPS 21 include a system that adjusts the temperature and humidity. More specific examples of the HPS 21 include devices used in an HVAC (Heating Ventilation and Air Conditioning) system, such as air conditioning apparatuses, showcases for conditioning the internal temperature, coolers, refrigerating machines, and water heaters.

When receiving an instruction for adjusting the apparent power in the electric line from the control server 30, the HPS 21 supplies the power to the electric line in response to the received instruction. More specifically, the HPS 21 supplies the current forming the power to the electric line to adjust the apparent power in the electric line. Adjusting the apparent power refers to adjusting one or both of the active power and the reactive power. In other words, adjusting the apparent power refers to adjusting at least one of the active power or the reactive power. Furthermore, the instruction for adjusting the apparent power refers to the instruction for adjusting one or both of the active power and the reactive power. In other words, the instruction for adjusting the apparent power refers to the instruction for adjusting at least one of the active power or the reactive power.

According to the present embodiment, the power supplied from the power plant 11 is received by the HPS 21 via the transmission line 12, the supply-side substation 13, the supply-side distribution line 14, the reception-side substation 16, the reception-side distribution line 17, the pole transformer 18, the demander-side distribution line 19, the power reception facility 201, and the in-facility line 202. Therefore, the transmission line 12, the supply-side substation 13, the supply-side distribution line 14, the reception-side substation 16, the reception-side distribution line 17, the pole transformer 18, the demander-side distribution line 19, the power reception facility 201, and the in-facility line 202 are regarded as electric paths through which the power supplied from the power plant 11 passes before the power is received by the HPS 21.

The load 22 receives and consumes the power supplied from the power plant 11 through the demander-side distribution line 19.

Furthermore, according to the present embodiment, the power consumption facility 20 includes an HPS sensor 21S. The HPS sensor 21S is provided for each of the HPSes 21. The HPS sensor 21S detects the power supplied from the HPS 21.

The HPS sensor 21S detects the power supplied from the HPS 21 at predetermined time intervals, for example. The predetermined time may be any time, but is for example 60 seconds. Furthermore, the information indicating the power supplied from the HPS 21 may be hereinafter referred to as HPS supply information. When detecting the HPS supply information, the HPS sensor 21S transmits the detected HPS supply information to the control server 30 together with HPS identification information for identifying the HPS 21 to be detected.

Further, in the illustrated example, the one power consumption facility 20 is provided for each of the demander-side distribution lines 19, but is not limited thereto. The power consumption facilities 20 may be provided for each of the demander-side distribution lines 19. Further, the numbers of the HPS 21 and the loads 22 provided in the power consumption facility 20 are not limited to those in the illustrated example. The power consumption facility 20 may include the HPSes 21 and the loads 22 that are larger in number than those illustrated in the drawing. Further, the power consumption facility 20 may include none of the HPSes 21 or the loads 22. Moreover, the power consumption facility 20 may include a device different from the HPS 21.

The control server 30 is a server device that controls an operation of the HPS 21. More specifically, the control server 30 controls the operation of the HPS 21 to adjust the apparent power in the electric line. The control server 30 acquires the power information from the management server 40. Furthermore, after acquiring the power information, the control server 30 determines whether to adjust the apparent power in the electric line based on the acquired power information. Then, when it is determined that the apparent power in the electric line is to be adjusted, the HPS 21 adjusts the apparent power in the electric line to be adjusted. Hereinafter, the electric line determined by the control server 30 as the target whose apparent power is to be adjusted may be referred to as adjustment target electric line.

Further, according to the present embodiment, the control server 30 performs control on the adjustment of the apparent power in the adjustment target electric line by the HPS 21 based on the power that may pass through the electric path through which the power supplied from the HPS 21 passes before the power is supplied to the adjustment target electric line. More specifically, the control server 30 performs control on the adjustment of the apparent power in the adjustment target electric line by the HPS 21 so as to prevent the power more than the maximum power, which may pass through the electric path, from passing through the electric path.

The management server 40 is a server device that manages the power system 10. The management server 40 acquires the power information and the facility power information from the power sensor 10S. When acquiring the power information, the management server 40 transmits the acquired power information to the control server 30 together with electric line identification information for identifying the electric line that is the target of the power information. Further, after acquiring the facility power information, the management server 40 transmits the acquired facility power information to the control server 30 together with facility identification information for identifying the facility that is the target of the facility power information.

The management server 40 and the control server 30 are implemented by, for example, a computer. The management server 40 and the control server 30 may be configured by a single computer or may be implemented by distributed processing using a plurality of computers. Further, the management server 40 and the control server 30 may be implemented on virtual hardware provided by cloud computing. Moreover, in the following description, the control server 30 and the management server 40 may be simply referred to as "servers" when they are not distinguished from each other in particular.

According to the present embodiment, the control server 30 is connected to each device provided in each of the power consumption facilities 20 and the management server 40 via a network (not illustrated). Further, the management server 40 is connected to each facility and each device provided in the power system 10 via a network (not illustrated). These networks may be any network that enables data transmission and reception. Furthermore, a communication line used for transmitting and receiving data may be wired, wireless, or power line communication (PLC: Power Line Communication). Furthermore, the configuration may include the connection to a communication destination via a plurality of networks or communication lines.

Furthermore, the numbers of the control servers 30 and the management servers 40 are not limited to those in the illustrated example. The power control system 1 may include the two or more control servers 30 or the two or more management servers 40. Further, the control server 30 may be provided for each of the power consumption facilities 20.

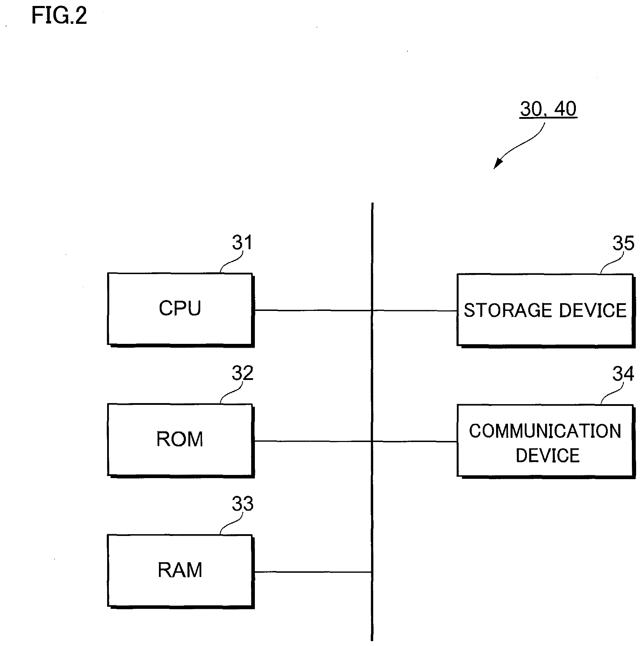

FIG. 2 is a diagram illustrating a hardware configuration of the control server 30 and the management server 40.

The server includes a CPU 31, a ROM (Read Only Memory) 32, and a RAM (Random Access Memory) 33. Further, the server includes a storage device 35 that is configured by a hard disk device, or the like, to store information. Further, the server includes a communication device 34 (communication I/F) that performs communications with an external unit.

In addition, the server includes an input device used for inputting information, such as a keyboard and a mouse, and a display device, such as a liquid crystal display.

The ROM 32 and the storage device 35 store programs to be executed by the CPU 31. The CPU 31 reads a program stored in the ROM 32 or the storage device 35 and executes the program using the RAM 33 as a work area.

The CPU 31 executes a program stored in the ROM 32 and the storage device 35 to thus implement each functional unit described below.

Here, the program to be executed by the CPU 31 may be provided to the server by being stored in a computer-readable recording medium such as magnetic recording medium (e.g., magnetic tape and magnetic disk), optical recording medium (e.g., optical disk), magneto-optical recording medium, and semiconductor memory. Further, the program to be executed by the CPU 31 may be provided to the server using a communication unit such as the Internet.

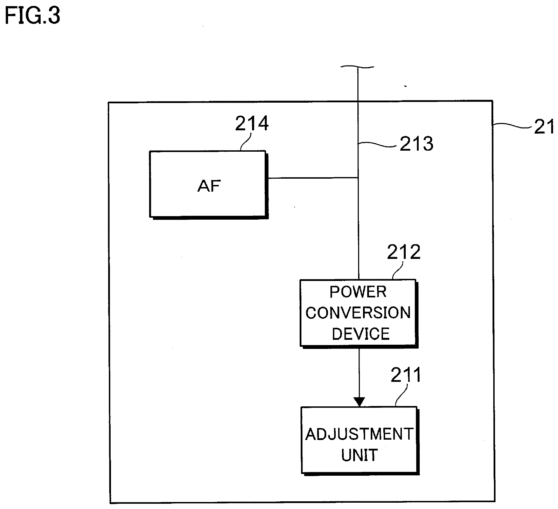

FIG. 3 is a diagram illustrating a functional configuration of the HPS 21.

The HPS 21 includes an adjustment unit 211, a power conversion device 212, a power reception path 213, and an active filter (AF: Active Filter) 214.

The adjustment unit 211 adjusts the temperature and humidity. The adjustment unit 211 includes a motor (not illustrated) that operates using the received power. Furthermore, the adjustment unit 211 includes a heat exchanger (not illustrated) so that the air and liquid in the power consumption facility 20 exchanges heat through the heat exchanger.

The power conversion device 212 includes an inverter (not illustrated) and a converter (not illustrated). The power conversion device 212 uses the inverter and the converter to convert the power received from the power system 10 into power having a specific voltage and a specific frequency. The specific voltage and the specific frequency are the voltage and the frequency needed for the operation of the motor provided in the adjustment unit 211. The power conversion device 212 supplies the converted power to the adjustment unit 211.

The power reception path 213 is a path to pass the power received by the power conversion device 212 in the HPS 21.

The AF 214 is electrically connected to the power reception path 213 of the power conversion device 212 in parallel with the power conversion device 212. The AF 214 supplies the current to the power reception path 213 of the power conversion device 212 to adjust the apparent power in the power reception path 213.

Furthermore, the AF 214 supplies the current to the electric line to adjust the apparent power in the electric line.

Furthermore, according to the present embodiment, the power to be detected by the HPS sensor 21S (see FIG. 1) is power supplied from the AF 214.

Furthermore, although FIG. 3 illustrates the functional configuration of the HPS 21, the device used to adjust the apparent power in the electric line is not limited to the HPS 21.

The device used to adjust the apparent power in the electric line may be any device that may supply the current to the electric line. Examples of the device that may supply the current to the electric line include a device including a power conversion device. More specifically, examples of the device that may supply the current to the electric line include a device including a power conversion device including at least one of an inverter or a converter. Furthermore, examples of the device including the power conversion device include an electric vehicle and a storage battery. Further, examples of the device including the power conversion device include a system that generates renewable energy such as a solar power generation system and a wind power generation system.

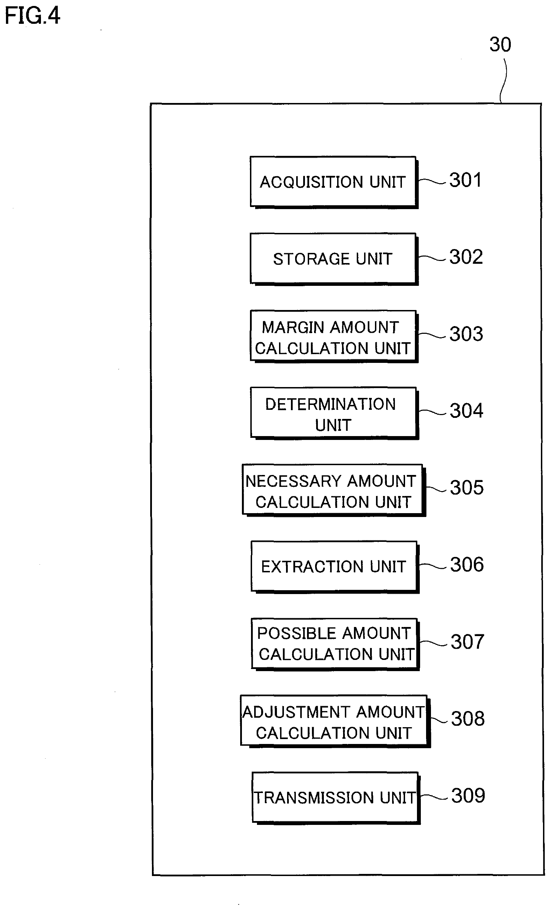

FIG. 4 is a diagram illustrating a functional configuration of the control server 30.

The control server 30 includes an acquisition unit 301, a storage unit 302, a margin amount calculation unit 303, a determination unit 304, a necessary amount calculation unit 305, an extraction unit 306, a possible amount calculation unit 307, an adjustment amount calculation unit 308, and a transmission unit 309.

The acquisition unit 301, which is an example of an acquisition unit, acquires information transmitted to the control server 30 or information input to the control server 30. As an example, the acquisition unit 301 acquires the power information transmitted from the management server 40 to the control server 30. Further, the acquisition unit 301 acquires the facility power information transmitted from the management server 40 and the facility power sensor 20S. Further, the acquisition unit 301 acquires the HPS supply information transmitted from the HPS sensor 21S.

Furthermore, the acquisition unit 301 acquires, from each of the HPSes 21, the information on the capability of the HPS 21 for supplying the power. Hereinafter, the information on the capability of the HPS 21 for supplying the power may be referred to as capability information. Therefore, the acquisition unit 301 may also be regarded as a capability information acquisition unit that acquires the capability information. Further, according to the present embodiment, the capability information is information indicating the maximum power that may be supplied by the AF 214 of the HPS 21. Furthermore, the user of the power control system 1 inputs the capability information on each of the HPSes 21 to the control server 30 so that the acquisition unit 301 may acquire the capability information on each of the HPSes 21.

Furthermore, the acquisition unit 301 according to the present embodiment acquires the information on the capacity of power in a predetermined electric path. The capacity of power in the electric path is the maximum power that may pass through the electric path without causing a short circuit or ignition in the electric path. In other words, the capacity of power in the electric path is the allowable value of power that may pass through the electric path. Further, according to the present embodiment, the predetermined electric path is the electric line, the reception-side substation 16, and the power reception facility 201. Hereinafter, the electric line, the reception-side substation 16, and the power reception facility 201 as the predetermined electric paths may be referred to as specific electric path. Further, the information on the capacity of power in the electric path may be hereinafter referred to as capacity information. According to the present embodiment, the capacity information is information indicating the capacity of power in the electric path. Further, according to the present embodiment, the user of the power control system 1 inputs the capacity information on each specific electric path to the control server 30 so that the acquisition unit 301 acquires the capacity information on each specific electric path. The storage unit 302 stores the information acquired by the acquisition unit 301.

The storage unit 302 stores information. The information stored in the storage unit 302 will be described below in detail.

The margin amount calculation unit 303 calculates the power as a margin to the capacity of power in the specific electric path. Hereinafter, the power as a margin to the capacity of power in the specific electric path may be referred to as margin amount. The margin amount calculation unit 303 subtracts the power passing through the specific electric path from the capacity of power in the specific electric path to calculate a margin amount. Here, the capacity of power in the specific electric path is specified from the capacity information. Furthermore, the power passing through the specific electric path is specified from the latest facility power information.

The margin amount calculation unit 303 calculates the margin amount at predetermined time interval. The predetermined time may be any time, but is for example 60 seconds. Further, the margin amount calculation unit 303 calculates the margin amount for each specific electric path. When calculating the margin amount, the margin amount calculation unit 303 stores the calculated margin amount in the storage unit 302.

The determination unit 304 determines the electric line to be adjusted by the HPS 21. Based on the power information acquired by the acquisition unit 301, the determination unit 304 determines whether the adjustment of the apparent power in the electric line related to the power information is necessary.

The necessary amount calculation unit 305 calculates the necessary power to be supplied to the adjustment target electric line in order to improve the apparent power in the adjustment target electric line. The necessary power to be supplied to the adjustment target electric line to improve the apparent power in the adjustment target electric line may be hereinafter referred to as adjustment necessary amount. The necessary amount calculation unit 305 calculates the adjustment necessary amount based on the power information on the adjustment target electric line.

The extraction unit 306 extracts the candidate of the HPS 21 to be used for adjustment of the apparent power in the adjustment target electric line. The extraction unit 306 extracts the HPS 21 that receives the power through the adjustment target electric line among the HPSes 21 provided in the power control system 1 as the candidate of the HPS 21 to be used for adjustment of the adjustment target electric line.

The possible amount calculation unit 307 calculates the power that may be supplied by the AF 214 of the HPS 21 to adjust the apparent power in the electric line. Hereinafter, the power that may be supplied by the AF 214 of the HPS 21 to adjust the apparent power in the electric line may be referred to as adjustable amount. The possible amount calculation unit 307 subtracts the power supplied from the HPS 21 from the maximum power that may be supplied by the AF 214 of the HPS 21 to calculate the adjustable amount. Here, the maximum power that may be supplied by the AF 214 in the HPS 21 is specified from the capability information. Furthermore, the power supplied from the HPS 21 is specified from the latest HPS supply information.

The possible amount calculation unit 307 calculates the adjustable amount at predetermined time interval. The predetermined time may be any time, but is for example 60 seconds. Further, the possible amount calculation unit 307 calculates the adjustable amount for each of the HPSes 21. When calculating the adjustable amount, the possible amount calculation unit 307 stores the calculated adjustable amount in the storage unit 302.

The adjustment amount calculation unit 308, which is an example of a control unit, calculates the power to be supplied to the adjustment target electric line in order to adjust the adjustment target electric line. Hereinafter, the power supplied to the adjustment target electric line to adjust the adjustment target electric line may be referred to as adjustment amount.

The adjustment amount calculation unit 308 calculates the adjustment amount based on the margin amount regarding the electric path to pass the power supplied from the HPS 21 to the adjustment target electric line. Hereinafter, the electric path to pass the power supplied from the HPS 21 to the adjustment target electric line may be referred to as passing electric path. More specifically, the adjustment amount calculation unit 308 calculates the adjustment amount based on the relation between the margin amount regarding the passing electric path and the adjustment necessary amount. Further, the adjustment amount calculation unit 308 calculates the adjustment amount based on the adjustable amount regarding the HPS 21. More specifically, the adjustment amount calculation unit 308 calculates the adjustment amount based on the relation between the adjustable amount and the adjustment necessary amount and the relation between the adjustable amount and the margin amount regarding the passing electric path.

Further, the adjustment amount calculation unit 308 calculates the power to be supplied from the AF 214 of the HPS 21 in order to adjust the adjustment target electric line based on the calculated adjustment amount. Hereinafter, the power supplied from the AF 214 of the HPS 21 to adjust the adjustment target electric line may be referred to as supply amount.

The transmission unit 309 transmits the information indicating the supply amount calculated by the adjustment amount calculation unit 308 to each of the HPSes 21. More specifically, the transmission unit 309 transmits the information indicating the supply amount together with the electric line identification information for identifying the adjustment target electric line to which the power corresponding to the supply amount is supplied to the target HPS 21 that supplies the power corresponding to the supply amount.

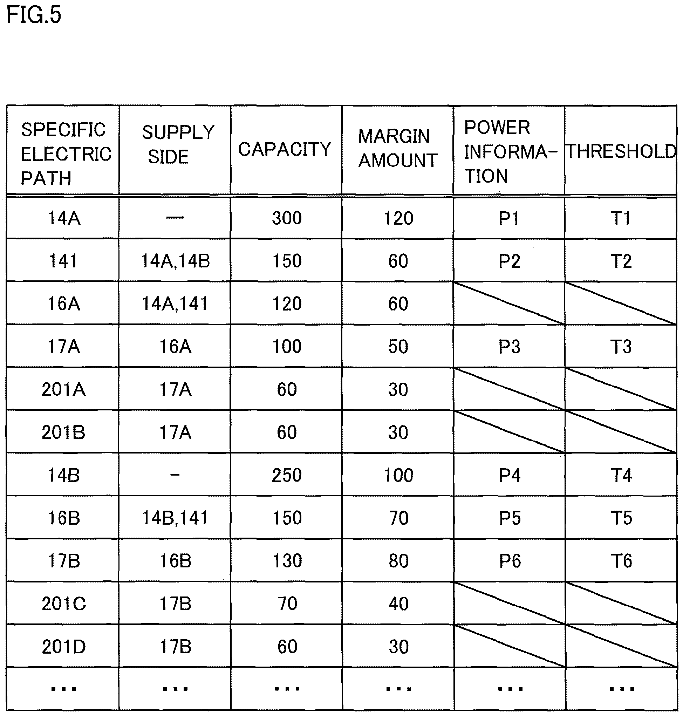

FIG. 5 is a diagram illustrating a specific electric path management table. The specific electric path management table is a table to manage the specific electric path. The storage unit 302 of the control server 30 stores the specific electric path management table.

In the specific electric path management table, the facility identification information is indicated in "specific electric path". "14" indicated in "specific electric path" means that the specific electric path is the supply-side distribution line 14. Further, "A" and "B" accompanied with "14" are information for identifying the corresponding ones of the supply-side distribution line 14A and the supply-side distribution line 14B. Further, "16" indicated in "specific electric path" means that the specific electric path is the reception-side substation 16. Further, "A" and "B" accompanied with "16" are information for identifying the corresponding ones of the reception-side substation 16A and the reception-side substation 16B. Further, "17" indicated in "specific electric path" means that the specific electric path is the reception-side distribution line 17. Further, "A" and "B" accompanied with "17" are information for identifying which the corresponding ones of the reception-side distribution line 17A and the reception-side distribution line 17B. Further, "141" indicated in "specific electric path" means that the specific electric path is the connection line 141. Further, "201" indicated in "specific electric path" means that the specific electric path is the power reception facility 201. Moreover, "A" to "D" accompanied with "201" are information for identifying the corresponding ones of the power reception facilities 201.

Further, in the specific electric path management table, the facility identification information is indicated in "supply side". The facility identification information indicated in "supply side" is the facility identification information on the specific electric path located closer to the power supply side from the power plant 11 than the "specific electric path" associated with the "supply side".

An example of "supply side" will be described. The "supply side" of "specific electric path" of "16A" is associated with "14A", which is the supply-side distribution line 14A, and "141", which is the connection line 141. Further, the "supply side" of "specific electric path" of " 16B" is associated with "14B", which is the supply-side distribution line 14B, and "141", which is the connection line 141. Furthermore, the "supply side" of "specific electric path" of "141" is associated with "14A", which is the supply-side distribution line 14A, and "14B", which is the supply-side distribution line 14B. Further, the "supply side" of "specific electric path" of "14A" and "14B" is associated with no specific electric path.

Furthermore, in the specific electric path management table, "capacity" indicates the capacity information on "specific electric path".

According to the present embodiment, the user of the power control system 1 inputs "specific electric path", "supply side", and "capacity" to the control server 30. When acquiring "specific electric path", "supply side", and "capacity", the acquisition unit 301 of the control server 30 writes the acquired "specific electric path", "supply side", and "capacity" in the specific electric path management table.

Furthermore, in the specific electric path management table, "margin amount" indicates the margin amount calculated by the margin amount calculation unit 303. The margin amount calculation unit 303 overwrites the calculated latest margin amount on "margin amount" associated with the target "specific electric path" every time the latest margin amount regarding the specific electric path is calculated.

Furthermore, in the specific electric path management table, "power information" indicates the latest power information detected by the power sensor 10S. Every time the latest power information is acquired, the acquisition unit 301 overwrites the acquired latest power information on "power information" associated with the target "specific electric path".

Further, in the specific electric path management table, "threshold" indicates the threshold set for the apparent power in "specific electric path". The "threshold" is a threshold used by the determination unit 304 to determine whether the adjustment of the apparent power in "specific electric path" is necessary. As "threshold", the upper limit value of "power information" may be set, based on which the determination unit 304 determines that the adjustment of the apparent power in "specific electric path" is unnecessary, or a value more than the upper limit value may be set. Furthermore, as "threshold", the lower limit value of "power information" may be set, based on which the determination unit 304 determines that the adjustment of the apparent power in "specific electric path" is unnecessary, or a value less than the lower limit value may be set. Furthermore, as "threshold", a range of values of "power information", based on which the determination unit 304 determines that the adjustment of the apparent power in "specific electric path" is unnecessary, may be set. Furthermore, as "threshold", a range of values of "power information", based on which the determination unit 304 determines that the adjustment of the apparent power in "specific electric path" is necessary, may be set. Furthermore, as "threshold", a threshold may be set for each of the above-described parameters regarding the apparent power.

Moreover, the target "specific electric path", for which "power information" and "threshold" are written, is the electric line included in the specific electric path.

An example of the content of the specific electric path management table will be described. The reception-side distribution line 17A specified from "17A" of "specific electric path" is associated with "16A" as "supply side", "100" as "capacity", "50" as "margin amount", "P3" as "power information", and "T3" as "threshold".

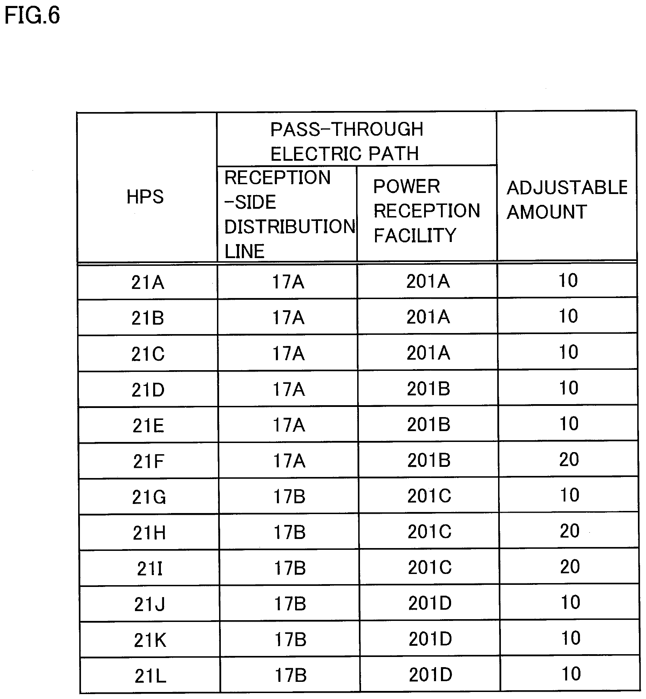

FIG. 6 is a diagram illustrating an HPS management table. The HPS management table is a table to manage the HPSes 21. The storage unit 302 of the control server 30 stores the HPS management table.

In the HPS management table, "HPS" indicates the HPS identification information. "A" to "L" accompanied with "21" of "HPS" is information for identifying the corresponding ones among the HPSes 21.

Furthermore, in the HPS management table, "pass-through electric path" indicates the facility identification information. The facility identification information indicated in "pass-through electric path" is the facility identification information on the electric path through which the power supplied from the power plant 11 is passed before the power is received by "HPS". Furthermore, "pass-through electric path" indicates "reception-side distribution line" and "power reception facility". "A" and "B" accompanied with "17" of "reception-side distribution line" are information for identifying the corresponding ones of the reception-side distribution line 17A and the reception-side distribution line 17B. Furthermore, "A" to "D" accompanied with "201" of "power reception facility" are information for identifying the corresponding ones of the power reception facilities 201.

The user of the power control system 1 inputs "HPS" and "reception-side distribution line" and "power reception facility" of "pass-through electric path " to the control server 30 for each of the HPSes 21. The acquisition unit 301 writes the acquired "HPS" and "reception-side distribution line" and "power reception facility" of "pass-through electric path " in the HPS management table.

Furthermore, in the HPS management table, "adjustable amount" indicates the adjustable amount calculated by the possible amount calculation unit 307 for "HPS". Each time the latest adjustable amount regarding the HPS 21 is calculated, the possible amount calculation unit 307 overwrites the calculated latest adjustable amount in "adjustable amount" associated with the target "HPS".

An example of the content of the HPS management table will be described. "HPS" specified from "21A" is associated with "reception-side distribution line" of " 17A" and "power reception facility" of "201A" as "pass-through electric path " and " 10" as "adjustable amount".

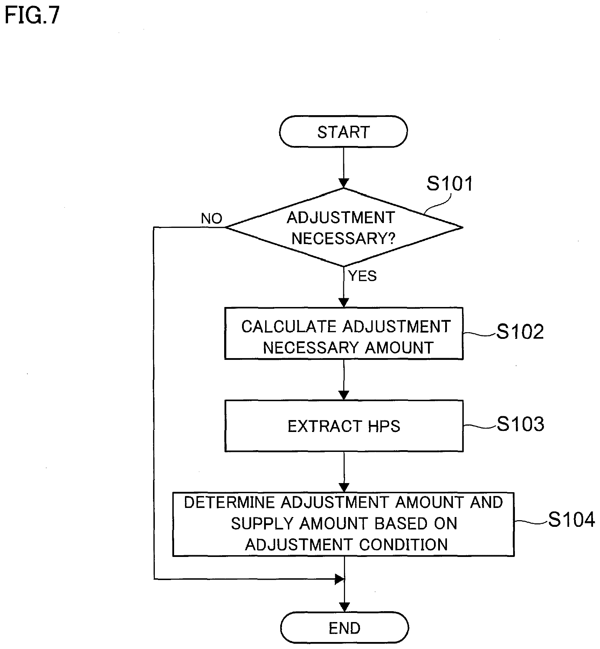

FIG. 7 is a flowchart illustrating the flow of an adjustment amount calculation process. The adjustment amount calculation process is a process in which the control server 30 calculates the adjustment amount. According to the present embodiment, when the management server 40 transmits the latest power information to the control server 30, the adjustment amount calculation process is started.

The determination unit 304 determines whether the adjustment of the apparent power in the electric line is necessary (Step (hereinafter referred to as "S") 101). The determination unit 304 refers to the specific electric path management table (see FIG. 5). Then, by comparing the latest "power information" associated with "specific electric path" regarding the electric line as a determination target with "threshold" associated with the "specific electric path" in the specific electric path management table, it is determined whether the adjustment of the apparent power in the electric line is necessary.

When the determination unit 304 determines that the adjustment of the apparent power in the electric line is not necessary (NO in S101), the adjustment amount calculation process ends. In this case, there is no adjustment of the apparent power in the electric line by the HPS 21.

Conversely, when the determination unit 304 determines that the adjustment of the apparent power in the electric line is necessary (YES in S101), the process proceeds to the subsequent step. In this case, the determination unit 304 determines that the target electric line for determination in Step S 101 is the target electric line whose apparent power is to be adjusted.

The necessary amount calculation unit 305 calculates the adjustment necessary amount for the adjustment target electric line (S102).

An example of the technique for calculating the adjustment necessary amount by the necessary amount calculation unit 305 will be described. The necessary amount calculation unit 305 calculates a larger adjustment necessary amount as there is a larger difference between the parameter specified from "power information" associated with "specific electric path" regarding the adjustment target electric line and "threshold" associated with the "specific electric path" in the specific electric path management table (see FIG. 5).

The extraction unit 306 extracts the candidate of the HPS 21 to be used for the adjustment of the apparent power in the adjustment target electric line (S103). The extraction unit 306 extracts "HPS" associated with the facility identification information on the adjustment target electric line in "pass-through electric path" in the HPS management table (see FIG. 6) as the candidate of the HPS 21 to be used for the adjustment. Furthermore, when the adjustment target electric line is any of the supply-side distribution line 14A, the supply-side distribution line 14B, and the connection line 141, the extraction unit 306 may extract all of the HPSes 21 "21A" to "21L" as the candidates to be used for the adjustment of the apparent power in the adjustment target electric line.

The adjustment amount calculation unit 308 determines the adjustment amount for the adjustment target electric line based on the adjustment condition and determines the supply amount for the HPS 21 (S104). The adjustment condition is a condition set for calculation of the adjustment amount by the adjustment amount calculation unit 308. The adjustment condition is set from the viewpoint of suppression of occurrence of a failure in the passing electric path and from the viewpoint of suppression of occurrence of a failure in the HPS 21. According to the present embodiment, three conditions are set as adjustment conditions.

A first condition as the adjustment condition will be described. The first condition is an adjustment amount condition. The adjustment amount condition is set for the relation between the adjustment amount for the adjustment target electric line and the adjustment necessary amount. More specifically, the adjustment amount condition is to bring the adjustment amount for the adjustment target electric line closer to the adjustment necessary amount.

As the adjustment amount for the adjustment target electric line is closer to the adjustment necessary amount, the degree of improvement of the apparent power in the adjustment target electric line is further improved. Therefore, from the viewpoint of improving the degree of improvement of the apparent power in the adjustment target electric line, bringing the adjustment amount for the adjustment target electric line closer to the adjustment necessary amount is set as one of the adjustment conditions.

A second condition as the adjustment condition will be described. The second condition is a margin amount condition. The margin amount condition is set for the margin amount regarding the passing electric path. More specifically, setting the power passing through the passing electric path to be equal to or less than the margin amount regarding the passing electric path is set as the margin amount condition.

When the power larger than the margin amount regarding the passing electric path passes through the passing electric path, the power larger than the capacity of power in the passing electric path passes through the passing electric path, and there is a possibility that a failure occurs in the passing electric path. Therefore, from the viewpoint of suppression of occurrence of a failure in the passing electric path, setting the power passing through the passing electric path to be equal to or less than the margin amount regarding the passing electric path is set as one of the adjustment conditions.

Furthermore, when a plurality of electric paths is present as the passing electric paths, the margin condition is set for each passing electric path.

A third condition as the adjustment condition will be described. The third condition is a supply amount condition. The supply amount condition is set for the supply amount regarding the HPS 21. More specifically, setting the supply amount regarding the HPS 21 to be equal to or less than the adjustable amount for the HPS 21 is set as the supply amount condition.

When the supply amount regarding the HPS 21 is set to be larger than the adjustable amount, a power larger than the power that may be supplied by the AF 214 is supplied from the AF 214, and in this case, a load generated in the HPS 21 becomes large, and there is a possibility of occurrence of a failure in the HPS 21. Therefore, from the viewpoint of suppression of occurrence of a failure in the HPS 21, setting the supply amount regarding the HPS 21 to be equal to or less than the adjustable amount is set as one of the adjustment conditions.

Furthermore, when there are the HPSes 21 used for adjusting the apparent power in the adjustment target electric line, the supply amount condition is set for each of the HPSes 21.

The adjustment amount calculation unit 308 specifies the passing electric path from the relation between "specific electric path" and "supply side" in the specific electric path management table (see FIG. 5) and the relation between "HPS" and "pass-through electric path" in the HPS management table (see FIG. 6). Then, the adjustment amount and the supply amount are determined so as to satisfy the adjustment condition for each specified passing electric path and the HPS 21 extracted by the extraction unit 306.

Next, a specific example of the adjustment amount calculation process (see FIG. 7) will be described.

It is assumed below that the adjustment target electric line is the reception-side distribution line 17A, the adjustment necessary amount is "60", and the HPSes 21 extracted by the extraction unit 306 as the candidates to be used for the adjustment of the apparent power in the adjustment target electric line are the six HPSes 21 "21A" to "21F" (see FIG. 6).

The determination unit 304 determines that the adjustment of the apparent power in the reception-side distribution line 17A is necessary (YES in S101). Further, the necessary amount calculation unit 305 calculates the adjustment necessary amount as "60" (S102). Further, the extraction unit 306 extracts the six HPSes 21 "21A" to "21F" (S103).

The adjustment amount calculation unit 308 calculates the adjustment amount for the reception-side distribution line 17A and the supply amount for the HPS 21 (S104).

Here, the total value of "adjustable amounts" (see FIG. 6) of the three HPSes 21 "21A" to "21C" is "10 + 10 + 10 = 30". Furthermore, "margin amount" (see FIG. 5) regarding "201A" (see FIG. 6), which is the power reception facility 201 of the power consumption facility 20 where the HPSes 21 "21A" to "21C" are provided, is "30". Therefore, the margin amount condition for the power reception facility 201 is satisfied even when "30", which is the total value of the adjustable amounts of the HPSes 21 "21A" to "21C", passes through the power reception facility 201 "201A".

Furthermore, the total value of "adjustable amounts" of the three HPSes 21 "21D" to "21F" is "10 + 10 + 20 = 40". Furthermore, "margin amount" (see FIG. 5) regarding "201B" (see FIG. 6), which is the power reception facility 201 of the power consumption facility 20 where the HPSes 21 "21D" to "21F" are provided, is "30". In this case, in order to satisfy the margin amount condition of the power reception facility 201 "201B", the power that may pass through the power reception facility 201 "201B" is "30" that is smaller than the total value of the adjustable amounts of the HPSes 21 "21D" to "21F".

The total value of the power that may pass through the power reception facility 201 "201A" and the power that may pass through the power reception facility 201 "201B" is "30 + 30 = 60". On the other hand, the margin amount regarding the reception-side distribution line 17A is "50". In this case, in order to satisfy the margin amount condition for the reception-side distribution line 17A, the adjustment amount calculation unit 308 determines that the power to be supplied to the reception-side distribution line 17A is "50". In other words, the adjustment amount calculation unit 308 determines that the adjustment amount for the reception-side distribution line 17A is "50" that is smaller than "60", which is the adjustment necessary amount for the reception-side distribution line 17A. Furthermore, the adjustment amount calculation unit 308 determines the supply amount for supplying the power having the determined adjustment amount. In this example, the adjustment amount calculation unit 308 determines that the supply amounts of the five HPSes 21 "21A" to "21E" are all "10".

The transmission unit 309 of the control server 30 gives an instruction to the HPS 21, which is used for the adjustment, to adjust the apparent power in the adjustment target electric line. In this case, the transmission unit 309 transmits the supply amount information indicating the supply amount determined by the adjustment amount calculation unit 308 and the electric line identification information for identifying the electric line that is the supply destination of the power.

The HPS 21 receives the instruction for adjusting the apparent power in the adjustment target electric line and acquires the supply amount information and the electric line identification information from the transmission unit 309. In this case, the HPS 21 supplies the current necessary for supplying the power specified from the supply amount information to the adjustment target electric line specified from the electric line identification information.

Furthermore, in the description according to the above-described example, the HPS 21 "21F" is not used for adjusting the apparent power in the adjustment target electric line, but is not limited thereto. The adjustment amount calculation unit 308 may determine the supply amount for each of the HPSes 21 so that all the HPSes 21 extracted by the extraction unit 306 are used for the adjustment. Further, the adjustment amount calculation unit 308 may determine the supply amount for the HPS 21 so that the HPS 21 having a large adjustable amount is preferentially used for the adjustment among the HPSes 21 extracted by the extraction unit 306.

As described above, according to the present embodiment, the margin amount calculation unit 303 calculates the margin amount regarding the passing electric path based on the capacity information. Then, the adjustment amount calculation unit 308 calculates the adjustment amount based on the margin amount regarding the passing electric path. In other words, the adjustment amount calculation unit 308 performs control on the adjustment of the apparent power in the adjustment target electric line by the HPS 21 based on the capacity information. Furthermore, in this case, the HPS 21 to be controlled by the adjustment amount calculation unit 308 may be the one HPS 21 or the plurality of HPSes 21.

In this case, the HPS 21 adjusts the apparent power in the adjustment target electric line according to the content of the adjustment based on the capacity information on the passing electric path. Therefore, as compared with the case where the HPS 21 adjusts the apparent power in the adjustment target electric line regardless of the index regarding the power capacity in the passing electric path, the HPS 21 may adjust the apparent power in the adjustment target electric line according to the content of adjustment suitable for the passing electric path.

Further, according to the present embodiment, the margin amount calculation unit 303 calculates the margin amount regarding the passing electric path based on the capacity information. Then, the adjustment amount calculation unit 308 determines the adjustment amount smaller than the adjustment necessary amount for the adjustment target electric line based on the margin amount regarding the passing electric path. In other words, the adjustment amount calculation unit 308 limits the adjustment of the apparent power in the adjustment target electric line by the HPS 21 based on the capacity information.

When the adjustment by the HPS 21 is not limited, the power larger than the margin amount regarding the passing electric path may pass through the passing electric path and, in this case, a failure is likely to occur in the passing electric path. Therefore, according to the present embodiment, the adjustment by the HPS 21 is limited, and thus the occurrence of a failure in the passing electric path is suppressed as compared with the case where the adjustment by the HPS 21 is not limited.

Further, according to the present embodiment, the possible amount calculation unit 307 calculates the adjustable amount regarding the HPS 21 based on the capability information. Then, the adjustment amount calculation unit 308 determines the adjustment amount for the adjustment target electric line based on the margin amount and the adjustable amount. In other words, the adjustment amount calculation unit 308 performs control on the adjustment of the apparent power in the adjustment target electric line by the HPS 21 based on the capacity information and the capability information.

In this case, the HPS 21 adjusts the apparent power in the adjustment target electric line according to the content of the adjustment based on the capability information on the HPS 21. Therefore, as compared with the case where the HPS 21 adjusts the apparent power in the adjustment target electric line regardless of the index regarding the capability of adjustment by the HPS 21, the HPS 21 may adjust the apparent power in the adjustment target electric line according to the content of adjustment suitable for the HPS 21.

Next, another specific example of the adjustment amount calculation process will be described.

It is assumed below that the adjustment target electric line is the supply-side distribution line 14A, the adjustment necessary amount is "60", and the HPSes 21 extracted by the extraction unit 306 as the candidates to be used for the adjustment of the apparent power in the adjustment target electric line are the six HPSes 21 "21A" to "21F" (see FIG. 6).

The determination unit 304 determines that the adjustment of the apparent power in the supply-side distribution line 14A is necessary (YES in S101). Further, the necessary amount calculation unit 305 calculates the adjustment necessary amount as "60" (S102). Further, the extraction unit 306 extracts the six HPSes 21 "21A" to "21F" (S103).

The adjustment amount calculation unit 308 calculates the adjustment amount for the supply-side distribution line 14A and the supply amount for the HPS 21 (S104).

Here, the total value of the power that may pass through the power reception facility 201 "201A" (see FIG. 5) and the power that may pass through the power reception facility 201 "201B" is "30 + 30 = 60" from the "margin amounts" of both. Furthermore, "margin amount" regarding the supply-side distribution line 14A is "120", and even when the power of "60" is supplied to the supply-side distribution line 14A, the margin amount condition for the supply-side distribution line 14A is satisfied. Furthermore, the margin amount regarding the reception-side substation 16A is "60", and even when the power of "60" passes through the reception-side substation 16A, the margin amount condition for the reception-side substation 16A is satisfied. On the other hand, the margin amount regarding the reception-side distribution line 17A is "50". In this case, in order to satisfy the margin amount condition for the reception-side distribution line 17A, the adjustment amount calculation unit 308 determines that the power passing through the reception-side distribution line 17A is "50". In other words, the adjustment amount calculation unit 308 determines that the adjustment amount for the supply-side distribution line 14A is "50" that is smaller than the adjustment necessary amount. Furthermore, the adjustment amount calculation unit 308 determines the supply amount for supplying the power having the determined adjustment amount. In this example, the adjustment amount calculation unit 308 determines that the supply amounts of the five HPSes 21 "21A" to "21E" are all "10".

In this way, the adjustment amount and the supply amount are determined.

As described above, according to the present embodiment, the passing electric path includes a first electric path and a second electric path provided closer to the power reception side than the first electric path. The first electric path is, for example, the supply-side distribution line 14A. Furthermore, the second electric path is, for example, the reception-side distribution line 17A. Furthermore, the adjustment amount calculation unit 308 performs control on the adjustment of the apparent power in the first electric path by the HPS 21 based on the capacity information on the first electric path and the capacity information on the second electric path.

In this case, the HPS 21 adjusts the apparent power in the adjustment target electric line according to the content of the adjustment based on the capacity information on the electric path through which the power from the HPS 21 passes before the power is supplied to the adjustment target electric line. Therefore, as compared with the case where the adjustment target electric line is adjusted regardless of the index regarding the capacity of power in the passing electric path, the HPS 21 may adjust the apparent power in the adjustment target electric line according to the content of adjustment suitable for the electric path through which the power from the HPS 21 passes before the power is supplied to the adjustment target electric line.

Furthermore, according to the present embodiment, the margin amount conditions are set for the margin amount calculated based on the capacity information on the first electric path and the margin amount calculated based on the capacity information on the second electric path, respectively. Then, the adjustment amount calculation unit 308 determines the adjustment amount based on each margin amount condition. In other words, the adjustment amount calculation unit 308 performs control on the adjustment of the apparent power in the first electric path by the HPS 21 based on the condition set for the capacity information on the first electric path and the condition set for the capacity information on the second electric path.

In this case, the HPS 21 may adjust the apparent power in the adjustment target electric line according to the content of adjustment corresponding to the index regarding the capacity of power in the first electric path and the index regarding the capacity of power in the second electric path.

Next, another specific example of the adjustment amount calculation process will be described.

It is assumed below that the adjustment target electric line is the reception-side distribution line 17A, the adjustment necessary amount is "40", and the HPSes 21 extracted by the extraction unit 306 as the candidates to be used for the adjustment of the apparent power in the adjustment target electric line are the three HPSes 21 "21A" to "21C" (see FIG. 6).

The determination unit 304 determines that the adjustment of the apparent power in the reception-side distribution line 17A is necessary (YES in S101). Further, the necessary amount calculation unit 305 calculates the adjustment necessary amount as "40" (S102). Furthermore, the extraction unit 306 extracts the three HPSes 21 "21A" to "21C" (S103).

The adjustment amount calculation unit 308 calculates the adjustment amount for the reception-side distribution line 17A and the supply amount for the HPS 21 (S104). Here, "margin amount" regarding the reception-side distribution line 17A is "50" (see FIG. 5), and even when "40", which is the adjustment necessary amount, is supplied to the reception-side distribution line 17A, the margin amount condition for the reception-side distribution line 17A is satisfied. On the other hand, the total value of the adjustable amounts for the three HPSes 21 "21A" to "21C" (see FIG. 6) is "10 + 10 + 10 = 30". In this case, in order to satisfy the possible amount condition for the three HPSes 21, the adjustment amount calculation unit 308 determines that the adjustment amount for the reception-side distribution line 17A is "30" that is smaller than the adjustment necessary amount. Furthermore, the adjustment amount calculation unit 308 determines the supply amount for supplying the power having the determined adjustment amount. In this example, the adjustment amount calculation unit 308 determines that the supply amounts of the three HPSes 21 "21A" to "21C" are all "10".

In this way, the adjustment amount and the supply amount are determined.

As described above, according to the present embodiment, the possible amount calculation unit 307 calculates the adjustable amount based on the capability information. Further, the adjustment amount calculation unit 308 determines the adjustment amount smaller than the adjustment necessary amount based on the adjustable amount. In other words, the adjustment amount calculation unit 308 limits the adjustment of the apparent power in the adjustment target electric line by the HPS 21 based on the capability information.

Next, another specific example of the adjustment amount calculation process will be described.

It is assumed below that the adjustment target electric line is the reception-side distribution line 17B, the adjustment necessary amount is "80", and the HPSes 21 extracted by the extraction unit 306 as the candidates to be used for the adjustment of the apparent power in the adjustment target electric line are the six HPSes 21 "21G" to "21L" (see FIG. 6).

The determination unit 304 determines that the adjustment of the apparent power in the reception-side distribution line 17B is necessary (YES in S101). Further, the necessary amount calculation unit 305 calculates the adjustment necessary amount as "80" (S102). Further, the extraction unit 306 extracts the six HPSes 21 "21G" to "21L" (S103).

The adjustment amount calculation unit 308 calculates the adjustment amount for the reception-side distribution line 17B and the supply amount for the HPS 21 (S104).

Here, "margin amount" regarding the reception-side distribution line 17B is "80" (see FIG. 5) and, even when "80", which is the adjustment necessary amount, is supplied to the reception-side distribution line 17B, the margin amount condition for the reception-side distribution line 17B is satisfied. Further, the total value of the adjustable amounts for the six HPSes 21 "21G" to "21L" (see FIG. 6) is "10 + 20 + 20 + 10 + 10 + 10 = 80". Therefore, even when the total value of the power supplied from the six HPSes 21 is set as the adjustment necessary amount, the possible amount condition for the six HPSes 21 is satisfied.

Furthermore, "margin amount" (see FIG. 5) regarding "201D" (see FIG. 6), which is the power reception facility 201 of the power consumption facility 20 where the HPSes 21 "21J" to "21L" are provided, is "30". Therefore, the margin amount condition for the power reception facility 201 is satisfied even when "30", which is the total value of the adjustable amounts of the HPSes 21 "21J" to "21L", passes through the power reception facility 201 "201D".

On the other hand, "margin amount" (see FIG. 5) regarding "201C" (see FIG. 6), which is the power reception facility 201 of the power consumption facility 20 where the HPSes 21 "21G" to "21I" are provided, is "40". Therefore, the margin amount condition for the power reception facility 201 is not satisfied when "50", which is the total value of the adjustable amounts of the HPSes 21 "21G" to "21I", passes through the power reception facility 201 "201C". In this case, in order to satisfy the margin amount condition for the power reception facility 201 "201C", the adjustment amount calculation unit 308 determines that the adjustment amount for the reception-side distribution line 17B is "70" that is smaller than the adjustment necessary amount. Furthermore, the adjustment amount calculation unit 308 determines the supply amount for supplying the power having the determined adjustment amount. In this example, the adjustment amount calculation unit 308 determines that the supply amounts of the HPSes 21 "21G", "21H", "211", "21J", "21K", and "21L" are "10", "20", "10", "10", "10", and "10", respectively.

In this way, the adjustment amount and the supply amount are determined.

As described above, according to the present embodiment, the passing electric path includes the first electric path and the second electric path provided closer to the power reception side than the first electric path. Here, the first electric path is, for example, the reception-side distribution line 17B. Furthermore, the second electric path is, for example, the power reception facility 201. Then, the adjustment amount calculation unit 308 performs control on the adjustment of the apparent power in the first electric path by the HPS 21 based on the capacity information on the first electric path and the capacity information on the second electric path.

Even in this case, as compared with the case where the adjustment target electric line is adjusted regardless of the index regarding the capacity of power in the passing electric path, the HPS 21 may adjust the apparent power in the adjustment target electric line according to the content of adjustment suitable for the electric path through which the power from the HPS 21 passes before the power is supplied to the adjustment target electric line.

Furthermore, according to the present embodiment, the margin amount conditions are set for the margin amount calculated based on the capacity information on the first electric path and the margin amount calculated based on the capacity information on the second electric path, respectively. Then, the adjustment amount calculation unit 308 determines the adjustment amount based on each margin amount condition. In other words, the adjustment amount calculation unit 308 performs control on the adjustment of the apparent power in the first electric path by the HPS 21 based on the condition set for the capacity information on the first electric path and the condition set for the capacity information on the second electric path.

Furthermore, the second electric path is provided in the power consumption facility 20 where the HPS 21 is provided.

In particular, in the above-described example, the maximum value of the power that may be supplied to the reception-side distribution line 17B is the adjustment necessary amount, and the margin amount regarding the reception-side distribution line 17B is equal to or more than the adjustment necessary amount. In this case, even when the power having the adjustable amount is supplied to the reception-side distribution line 17B, the margin amount condition for the reception-side distribution line 17B is satisfied. Therefore, the margin amount condition for the reception-side distribution line 17B may also be regarded as the condition for the relation between the margin amount and the adjustment necessary amount regarding the reception-side distribution line 17B. Furthermore, the maximum value of the power that may pass through the power reception facility 201 "201C" (see FIG. 5) is the total value of the adjustable amounts regarding the respective HPSes 21 provided in the power reception facility 201, and the margin amount regarding the power reception facility 201 is less than the total value of the adjustable amounts. In this case, when the total value of the adjustable amounts passes through the power reception facility 201, the margin amount condition for the power reception facility 201 is not satisfied. Therefore, the margin amount condition for the power reception facility 201 may also be regarded as the condition for the relation between the margin amount and the adjustable amount regarding the power reception facility 201. In other words, the condition set for the capacity information on the first electric path is set for the power necessary for adjusting the apparent power in the first electric path. Further, the condition set for the capacity information on the second electric path is set for the capability of adjustment by the HPS 21.

In this case, as compared with the case where the HPS 21 adjusts the apparent power in the adjustment target electric line unconditionally with regard to the capacity of power in the passing electric path, the HPS 21 may adjust the apparent power in the adjustment target electric line according to the content of adjustment suitable for the passing electric path and the HPS 21.

Next, another specific example of the adjustment amount calculation process will be described.

It is assumed below that the adjustment target electric line is the supply-side distribution line 14A, the adjustment necessary amount is "50", and the HPSes 21 extracted by the extraction unit 306 as the candidates to be used for the adjustment of the apparent power in the adjustment target electric line are the 12 HPSes 21 "21A" to "21L" (see FIG. 6). Furthermore, it is assumed that, when the apparent power in the supply-side distribution line 14A is adjusted by using the HPSes 21 "21G" to "21L", the power supplied from the HPS 21 is supplied to the supply-side distribution line 14A via the reception-side distribution line 17B, the reception-side substation 16B, the supply-side distribution line 14B, and the connection line 141.

The determination unit 304 determines that the adjustment of the apparent power in the supply-side distribution line 14A is necessary (YES in S101). Further, the necessary amount calculation unit 305 calculates the adjustment necessary amount as "50" (S102). Further, the extraction unit 306 extracts the 12 HPSes 21 "21A" to "21L" (S103).

The adjustment amount calculation unit 308 calculates the adjustment amount for the supply-side distribution line 14A and the supply amount for the HPS 21 (S104).

Here, "margin amounts" (see FIG. 5) of the supply-side distribution line 14A, the supply-side distribution line 14B, the connection line 141, the reception-side substation 16A, the reception-side substation 16B, the reception-side distribution line 17A, and the reception-side distribution line 17B are all equal to or more than the adjustment necessary amount. Therefore, even when the power having the adjustment necessary amount passes through any passing electric path in the power system 10, the margin amount condition for each passing electric path is satisfied.

Further, the total value of "margin amount" regarding the power reception facility 201 "201A" through which the power supplied from the HPSes 21 "21A" to "21C" passes and "margin amount" regarding the power reception facility 201 "201B" through which the power supplied from the HPSes 21 "21D" to "21F" passes is "30 + 30 = 60". The total value is larger than the adjustment necessary amount, and therefore, even when the total value of the power passing through the power reception facility 201 "201A" and the power reception facility 201 "201B" is the adjustment necessary amount, the margin amount condition for the power reception facility 201 "201A" and the power reception facility 201 "201B" is satisfied. Further, the total value of the adjustable amounts (see FIG. 6) for the six HPSes 21 "21A" to "21F" is larger than the adjustment necessary amount. Therefore, even when the power having the adjustment necessary amount is supplied by using the six HPSes 21 "21A" to "21F", the possible amount condition for the six HPSes 21 is satisfied.

Further, the total value of "margin amount" regarding the power reception facility 201 "201C" through which the power supplied from the HPSes 21 "21G" to "211" passes and "margin amount" regarding the power reception facility 201 "201D" through which the power supplied from the HPSes 21 "21J" to "21L" passes is "40 + 30 = 70". The total value is larger than the adjustment necessary amount, and therefore even when the total value of the power passing through the power reception facility 201 "201C" and the power reception facility 201 "201D" is the adjustment necessary amount, the margin amount condition for the power reception facility 201 "201C" and the power reception facility 201 "201D" is satisfied. Further, the total value of the adjustable amounts (see FIG. 6) for the six HPSes 21 "21G" to "21L" is larger than the adjustment necessary amount. Therefore, even when the power having the adjustment necessary amount is supplied by using the six HPSes 21 "21G" to "21L", the possible amount condition for the six HPSes 21 is satisfied.

In this case, the adjustment amount calculation unit 308 determines that the adjustment amount for the supply-side distribution line 14A is "50" that is the adjustment necessary amount. Furthermore, the adjustment amount calculation unit 308 determines the supply amount for supplying the power having the determined adjustment amount. In this example, the adjustment amount calculation unit 308 determines that the supply amounts of the five HPSes 21 "21A" to "21E" are all "10".

In the above-described example, in any of the case where the HPSes 21 "21A" to "21F" are used and the case where the HPSes 21 "21G" to "21L" are used, the power having the adjustment necessary amount may be supplied to the adjustment target electric line. On the other hand, the HPSes 21 "21A" to "21F" easily adjust the apparent power in the supply-side distribution line 14A as compared with the HPSes 21 "21G" to "21L" because the number of passing electric paths located between the supply-side distribution line 14A and them is smaller. Therefore, according to the present embodiment, the adjustment amount calculation unit 308 uses the HPSes 21 "21A" to "21E" instead of the HPSes 21 "21G" to "21L" to adjust the apparent power in the supply-side distribution line 14A.

Furthermore, in the above-described example, when the adjustment necessary amount for the supply-side distribution line 14A is "60", it is impossible to supply the power having the adjustment necessary amount to the adjustment target electric line even using the HPSes 21 "21A" to "21F" as the margin amount for the reception-side distribution line 17A is "50". On the other hand, when the HPSes 21 "21G" or "21L" are used, the power having the adjustment necessary amount may be supplied to the adjustment target electric line. In this case, the adjustment amount calculation unit 308 may determine that the HPSes 21 "21G" to "21L" are used to adjust the adjustment target electric line without using the HPSes 21 "21A" to "21F". This determination is an example of controlling the relation of adjustment using the HPSes 21 based on the capability information on the HPSes 21.

Next, another specific example of the adjustment amount calculation process will be described.

It is assumed below that the adjustment target electric line is the supply-side distribution line 14A, the adjustment necessary amount is "120", and the HPSes 21 extracted by the extraction unit 306 as the candidates to be used for the adjustment of the apparent power in the adjustment target electric line are the 12 HPSes 21 "21A" to "21L" (see FIG. 6).

The determination unit 304 determines that the adjustment of the apparent power in the supply-side distribution line 14A is necessary (YES in S101). Further, the necessary amount calculation unit 305 calculates the adjustment necessary amount as "120" (S102). Further, the extraction unit 306 extracts the 12 HPSes 21 "21A" to "21L" (S103).

The adjustment amount calculation unit 308 calculates the adjustment amount for the supply-side distribution line 14A and the supply amount for the HPS 21 (S104).

First, the case where the apparent power in the supply-side distribution line 14A is adjusted by using the six HPSes 21 "21A" to "21F" will be described. When the HPSes 21 "21A" to "21F" adjust the apparent power in the supply-side distribution line 14A, the power supplied from the HPS 21 passes through the reception-side distribution line 17A, the reception-side substation 16A, and the supply-side distribution line 14A. Here, the smallest "margin amount" among the respective "margin amounts" regarding the reception-side distribution line 17A, the reception-side substation 16A, and the supply-side distribution line 14A is "50" (see FIG. 5) that is "margin amount" regarding the reception-side distribution line 17A. Further, the total value of the adjustable amounts for the six HPSes 21 "21A" to "21F" is larger than "50". Further, the total value of "margin amount" regarding the power reception facility 201 "201A" and the margin amount (see FIG. 5) regarding the power reception facility 201 "201B" is larger than "50". Therefore, the maximum power that may be supplied to the supply-side distribution line 14A by the HPSes 21 "21A" to "21F" in the range that satisfies the adjustment condition is "50".

Next, the case will be described in which the apparent power in the supply-side distribution line 14A is adjusted by using the six HPSes 21 "21G" to "21L". When the HPSes 21 "21G" to "21L" adjust the apparent power in the supply-side distribution line 14A, the power supplied from the HPS 21 passes through the reception-side distribution line 17B, the reception-side substation 16B, the supply-side distribution line 14B, the connection line 141, and the supply-side distribution line 14A. Here, the smallest "margin amount" among the respective "margin amounts" regarding the reception-side distribution line 17B, the reception-side substation 16B, the supply-side distribution line 14B, the connection line 141, and the supply-side distribution line 14A is "60" (see FIG. 5) that is "margin amount" regarding the connection line 141. Further, the total value of the adjustable amounts for the six HPSes 21 "21G" to "21L" is larger than "60". Furthermore, the total value of the margin amount regarding the power reception facility 201 "201C" and the margin amount regarding the power reception facility 201 "201D" is larger than "60". Therefore, the maximum power that may be supplied to the supply-side distribution line 14A by the HPSes 21 "21G" to "21L" in the range that satisfies the adjustment condition is "60".

In this case, the adjustment amount calculation unit 308 determines that the adjustment amount is the total value of the maximum power that may be supplied to the supply-side distribution line 14A by the HPSes 21 "21A" to "21F" and the maximum power that may be supplied to the supply-side distribution line 14A by the HPSes 21 "21G" to "21L" within the range that satisfies the adjustment condition. More specifically, the adjustment amount calculation unit 308 determines that the total value "50 + 60 = 110" is the adjustment amount for the supply-side distribution line 14A. Furthermore, the adjustment amount calculation unit 308 determines the supply amount for supplying the power having the determined adjustment amount. In this example, the adjustment amount calculation unit 308 determines that the supply amounts for the five HPSes 21 "21A" to "21E" are all "10". Further, the adjustment amount calculation unit 308 determines that the supply amounts for the six HPSes 21 "21G" to "21L" are all "10".

As described above, according to the present embodiment, the passing electric path includes the first electric path and the second electric path different from the first electric path. Here, examples of the first electric path include the supply-side distribution line 14A, the reception-side substation 16A, the reception-side distribution line 17A, and the power reception facilities 201 "201A" and "201B" (see FIG. 6). Furthermore, examples of the second electric path include the supply-side distribution line 14B, the reception-side substation 16B, the reception-side distribution line 17B, and the power reception facilities 201 "201C" and "201D". Furthermore, the HPSes 21 include the HPSes 21 such as "21A" to "21F" (see FIG. 6), which may receive the power not via the second electric path but via the first electric path, and the HPSes 21 such as "21G" to "21L", which may receive the power not via the first electric path but via the second electric path. Then, the adjustment amount calculation unit 308 performs control on the relation between the adjustment by the HPSes 21 such as "21A" to "21F" and the adjustment by the HPSes 21 such as "21G" to "21L" based on the capacity information on the first electric path and the capacity information on the second electric path. Furthermore, in this case, the HPS 21 to be controlled by the adjustment amount calculation unit 308 may be the one HPS 21 or the plurality of HPSes 21 among the HPSes 21 "21A" to "21F". Furthermore, the HPS 21 to be controlled by the adjustment amount calculation unit 308 may be the one HPS 21 or the plurality of HPSes 21 among the HPSes 21 "21G" to "21L".

In this case, the relation between the adjustment by the HPSes 21 such as "21A" to "21F" and the adjustment by the HPSes 21 such as "21G" to "21L" is determined based on the capacity information on the first electric path and the capacity information on the second electric path. Therefore, as compared with the case where the adjustment relation is determined regardless of the index regarding the capacity of the power in the passing electric path, the adjustment relation may be determined according to the content suitable for the passing electric path.

Furthermore, according to the present embodiment, the adjustment amount calculation unit 308 performs control on the relation between the adjustment by the HPSes 21 such as "21A" to "21F" and the adjustment by the HPSes 21 such as "21G" to "21L" based on the capability information on the HPSes 21 "21A" to "21F" and the capability information on the HPSes 21 "21G" to "21L".

In this case, the relation between the adjustment by the HPSes 21 such as "21A" to "21F" and the adjustment by the HPSes 21 such as "21G" to "21L" is determined based on the capability information on the HPSes 21. Therefore, as compared with the case where the adjustment relation is determined regardless of the index regarding the adjustment capability of the HPSes 21, the adjustment relation may be determined according to the adjustment content suitable for the HPSes 21.

In particular, according to the present embodiment, the first electric path is provided in the power consumption facility 20 where the HPSes 21 such as "21A" to "21F" are provided. Furthermore, the second electric path is provided in the power consumption facility 20 where the HPSes 21 such as "21G" to "21L" are provided. Here, examples of the first electric path include the power reception facilities 201 "201A" and "201B" (see FIG. 6). Further, examples of the second electric path include the power reception facilities 201 "201C" and "201D".

In this case, the relation between the adjustment by the HPSes 21 such as "21A" to "21F" and the adjustment by the HPSes 21 such as "21G" to "21L" is determined based on the relation between the index regarding the capacity of power in the first electric path and the index regarding the capability of adjustment for the HPSes 21 such as "21A" to "21F" and the relation between the index regarding the capacity of power in the second electric path and the index regarding the capability of adjustment for the HPSes 21 such as "21G" to "21L". Therefore, the adjustment relation may be determined according to the relation suitable for the index regarding the capacity of power in the passing electric path and the index regarding the adjustment capability by the HPSes 21.

<Modification>

Next, a modification of the power control system 1 will be described.

In the description according to the present embodiment, the control server 30 determines the supply amount of the HPS 21 based on the capacity information on the electric path through which the power supplied from the power plant 11 passes before the power is received by the HPS 21. Here, the electric path that is the target for the capacity information used by the control server 30 is not limited to the electric path through which the power supplied from the power plant 11 passes before the power is received by the HPS 21.

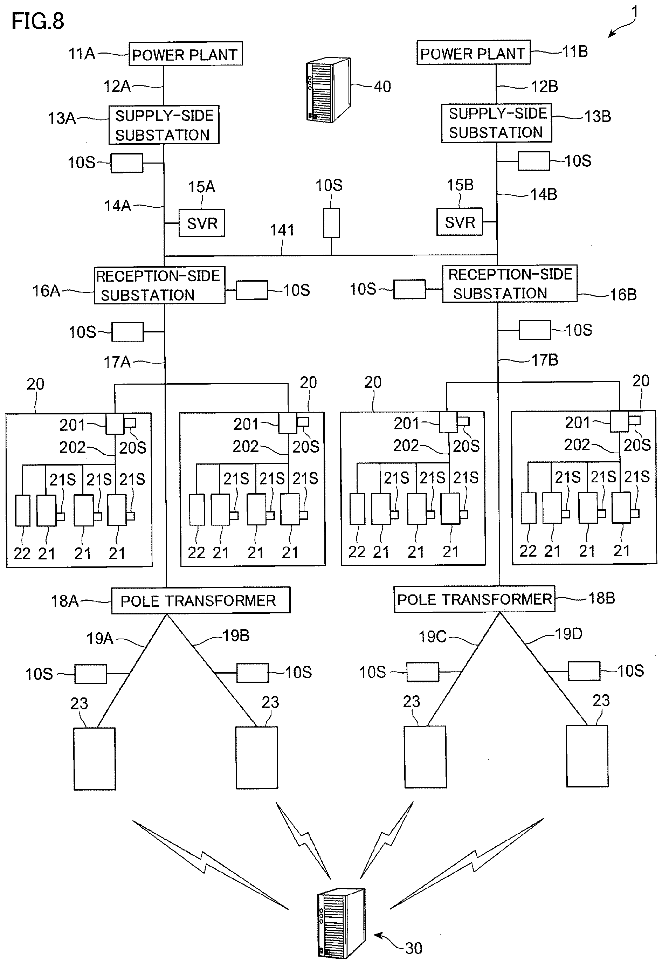

FIG. 8 is a diagram illustrating an overall configuration of the power control system 1 according to the modification. In the modification, the description of the same configuration as that described above will be omitted.

In the power control system 1 illustrated in FIG. 8, the power consumption facility 20 is coupled to the reception-side distribution line 17. More specifically, the two power consumption facilities 20 are coupled to both the reception-side distribution line 17A and the reception-side distribution line 17B. In this case, each of the power consumption facilities 20 receives the power supplied from the power plant 11 via the reception-side distribution line 17 and not via the demander-side distribution line 19.

Furthermore, in the power control system 1 illustrated in FIG. 8, the power sensor 10S is provided for each of the demander-side distribution lines 19. The power sensors 10S are coupled to the demander-side distribution lines 19, respectively.

Moreover, in the power control system 1 illustrated in FIG. 8, a reception-side device 23 is provided for each of the demander-side distribution lines 19. The reception-side device 23 is a device that receives the power, which is supplied from the power plant 11, via the demander-side distribution line 19. The reception-side devices 23 are coupled to the demander-side distribution lines 19, respectively. Examples of the reception-side device 23 include a system that generates renewable energy such as a solar power generation system or a wind power generation system.

According to the modification, the demander-side distribution line 19 is provided closer to the power reception side than the HPS 21. Further, according to the modification, the facility located closest to the power reception side is the reception-side device 23.

Furthermore, according to the modification, the control server 30 acquires the capacity information that uses the demander-side distribution line 19 as the target electric path. Further, the control server 30 determines the supply amount of the HPS 21 based on the capacity information that uses, as the target, the electric path through which the power supplied from the power plant 11 passes before the power is received by the HPS 21 and the capacity information that uses the demander-side distribution line 19 as the target.

In addition, when the HPS 21 adjusts the apparent power in the adjustment target electric line, the power from the HPS 21 may be supplied not only to the electric line from the HPS 21 to the adjustment target electric line but also to the electric line provided closer to the power reception side than the HPS 21. In this case, when the HPS 21 supplies the power regardless of the capacity of power in the electric path provided closer to the power reception side than the HPS 21, the adjustment target electric line may be adjusted according to the content unsuitable for the electric path provided closer to the power reception side than the HPS 21.

Therefore, the control server 30 determines the supply amount of the HPS 21 based on not only the capacity information targeted for the electric path through which the power supplied from the power plant 11 passes before the power is received by the HPS 21 but also the capacity information targeted for the demander-side distribution line 19.

Further, the demander-side distribution line 19 is regarded as a reception-side electric path provided closer to the power reception side than the HPS 21. Moreover, in a broad sense, the demander-side distribution line 19 is also regarded as a specific electric path. Further, the capacity information that uses the demander-side distribution line 19 as the target electric path is regarded as reception-side capacity information. The reception-side capacity information is information on the capacity of power in the demander-side distribution line 19.

The power sensor 10S coupled to the demander-side distribution line 19 transmits, to the management server 40, the power information and the facility power information on the coupled demander-side distribution line 19 together with the facility identification information for identifying the demander-side distribution line 19.

Further, the management server 40 transmits the received power information, facility power information, and facility identification information to the control server 30.

Furthermore, the user of the power control system 1 inputs the reception-side capacity information on the demander-side distribution line 19 to the control server 30.

The margin amount calculation unit 303 of the control server 30 calculates the margin amount of the demander-side distribution line 19 from the facility power information and the reception-side capacity information acquired for the demander-side distribution line 19.

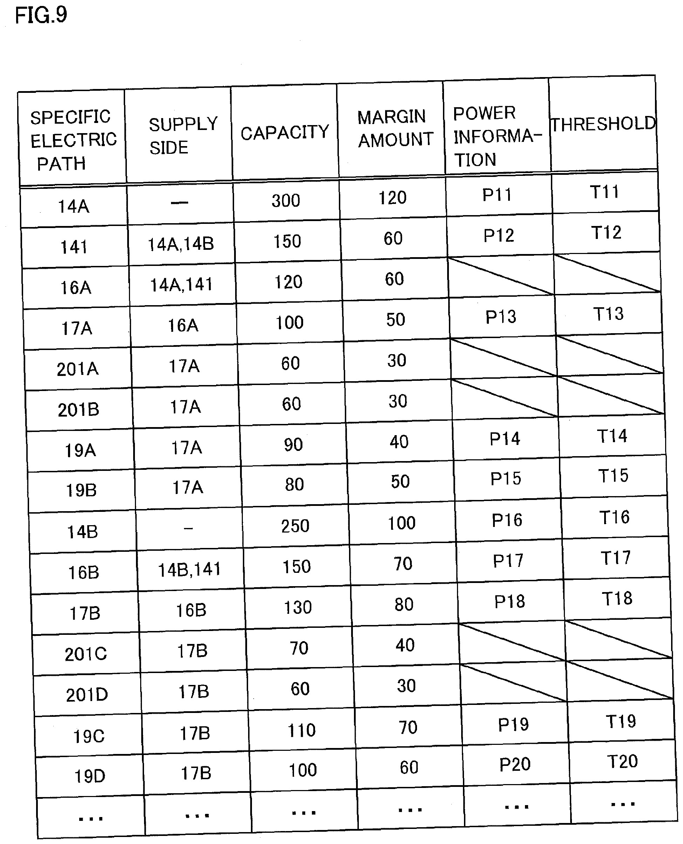

FIG. 9 is a diagram illustrating a specific electric path management table according to the modification.

"19" described in "specific electric path" of the specific electric path management table means that the specific electric path is the demander-side distribution line 19. Furthermore, "A" to "D" accompanied with "19" are information for identifying the corresponding ones of the demander-side distribution lines 19A to 19D illustrated in FIG. 8.

Furthermore, in the specific electric path management table, "supply side" of "specific electric path" of "19A" and "19B" is associated with " 17A" that is the reception-side distribution line 17A. Furthermore, "supply side" of "specific electric path" of "19C" and "19D" is associated with " 17B" that is the reception-side distribution line 17B.

An example of the content of the specific electric path management table according to the modification will be described. The demander-side distribution line 19A specified from " 19A" of "specific electric path" is associated with " 17A" as "supply side", "90" as "capacity", "40" as "margin amount", "P14" as "power information", and "T14" as "threshold".

According to the modification, too, in the adjustment amount calculation process (see FIG. 7), the control server 30 determines the adjustment amount for the adjustment target electric line and the supply amount of the HPS 21 based on the adjustment conditions including the adjustment amount condition, the margin amount condition, and the supply amount condition (see S104 in FIG. 7). In this case, according to the modification, in addition to setting the power passing through the passing electric path to be equal to or less than the margin amount regarding the passing electric path, another condition is set as the margin amount condition. More specifically, setting the power passing through the specific demander-side distribution line 19 to be equal to or less than the margin amount regarding the specific demander-side distribution line 19 is set as another condition of the margin amount condition. Furthermore, the specific demander-side distribution line 19 is the demander-side distribution line 19 that receives the power supplied from the power plant 11 via the adjustment target electric line.

Next, a specific example of the adjustment amount calculation process (see FIG. 7) according to the modification will be described.

It is assumed below that the adjustment target electric line is the reception-side distribution line 17A, the adjustment necessary amount is "50", and the HPSes 21 extracted by the extraction unit 306 as the candidates to be used for adjustment of the apparent power in the adjustment target electric line are the six HPSes 21 "21A" to "21F" (see FIG. 6). Furthermore, it is assumed that the necessary power to be supplied to the demander-side distribution line 19A in order to improve the apparent power in the demander-side distribution line 19 is "40".

The determination unit 304 determines that the adjustment of the apparent power in the reception-side distribution line 17A is necessary (YES in S101). Further, the necessary amount calculation unit 305 calculates the adjustment necessary amount as "50" (S102). Further, the extraction unit 306 extracts the six HPSes 21 "21A" to "21F" (S103).

The adjustment amount calculation unit 308 calculates the adjustment amount for the reception-side distribution line 17A and the supply amount for the HPS 21 based on the adjustment condition (S104).

Here, the total value of "adjustable amounts" (see FIG. 6) of the three HPSes 21 "21A" to "21C" is "10 + 10 + 10 = 30". Furthermore, "margin amount" (see FIG. 9) regarding "201A" (see FIG. 6), which is the power reception facility 201 of the power consumption facility 20 where the HPSes 21 "21A" to "21C" are provided, is "30". Therefore, even when "30", which is the total value of the adjustable amounts of the HPSes 21 "21A" to "21C", passes through the power reception facility 201 "201A", the margin amount condition for the power reception facility 201 is satisfied.

Furthermore, the total value of "adjustable amounts" of the three HPSes 21 "21D" to "21F" is "10 + 10 + 20 = 40". Furthermore, "margin amount" (see FIG. 9) regarding "201B" (see FIG. 6), which is the power reception facility 201 of the power consumption facility 20 where the HPSes 21 "21D" to "21F" are provided, is "30". In this case, in order to satisfy the margin amount condition of the power reception facility 201 "201B", the power that may pass through the power reception facility 201 "201B" is "30" that is smaller than the total value of the adjustable amounts of the HPSes 21 "21D" to "21F".

The total value of the power that may pass through the power reception facility 201 "201A" and the power that may pass through the power reception facility 201 "201B" is "30 + 30 = 60". On the other hand, the margin amount regarding the reception-side distribution line 17A is "50". Therefore, the power that satisfies the margin amount condition for the reception-side distribution line 17A is "50".

Further, the demander-side distribution line 19 that receives the power supplied from the power plant 11 via the reception-side distribution line 17A, which is the adjustment target electric line, is the demander-side distribution line 19A and the demander-side distribution line 19B. Here, the margin amount regarding the demander-side distribution line 19A is "40", and the margin amount regarding the demander-side distribution line 19B is "50" (see FIG. 9). Therefore, the power that satisfies the margin amount condition for the demander-side distribution line 19A and the margin amount condition for the demander-side distribution line 19B is "40".

Furthermore, in this case, in order to satisfy the margin amount condition for the reception-side distribution line 17A, the margin amount condition for the demander-side distribution line 19A, and the margin amount condition for the demander-side distribution line 19B, the adjustment amount calculation unit 308 determines that the power to be supplied to the reception-side distribution line 17A is "40". In other words, the adjustment amount calculation unit 308 determines that the adjustment amount for the reception-side distribution line 17A is "40" that is smaller than "60", which is the adjustment necessary amount for the reception-side distribution line 17A and "50", which is the margin amount for the reception-side distribution line 17A and the margin amount for the demander-side distribution line 19B. Furthermore, the adjustment amount calculation unit 308 determines the supply amount for supplying the power having the determined adjustment amount. In this example, the adjustment amount calculation unit 308 determines that the supply amounts of the four HPSes 21 "21A" to "21D" are all "10".

The transmission unit 309 of the control server 30 gives an instruction to the HPS 21, which is used for the adjustment, to adjust the apparent power in the adjustment target electric line. In this case, the transmission unit 309 transmits the supply amount information indicating the supply amount determined by the adjustment amount calculation unit 308 and the electric line identification information for identifying the electric line that is the supply destination of the power.

The HPS 21 receives the instruction for adjusting the apparent power in the adjustment target electric line and acquires the supply amount information and the electric line identification information from the transmission unit 309. In this case, the HPS 21 supplies the current necessary for supplying the power specified from the supply amount information to the adjustment target electric line specified from the electric line identification information.

As described above, according to the present embodiment, the acquisition unit 301 of the control server 30 acquires the reception-side capacity information on the capacity of power in the demander-side distribution line 19. Furthermore, the adjustment amount calculation unit 308 performs control on the supply of power from the HPS 21 to the adjustment target electric line based on the capacity information and the reception-side capacity information.

In this case, the HPS 21 adjusts the apparent power in the adjustment target electric line according to the content based on the reception-side capacity information in the demander-side distribution line 19. Therefore, as compared with the case where the HPS 21 adjusts the apparent power in the adjustment target electric line regardless of the index regarding the capacity of power in the demander-side distribution line 19, the HPS 21 may adjust the apparent power in the adjustment target electric line according to the content suitable for the demander-side distribution line 19.

Further, in the above-described example, it is necessary to supply the power not only to the adjustment target electric line but also to the demander-side distribution line 19 in order to improve the apparent power. In this case, when the HPS 21 supplies the power to the adjustment target electric line, the power from the HPS 21 is supplied not only to the adjustment target electric line but also to the demander-side distribution line 19. Therefore, not only the apparent power in the adjustment target electric line but also the apparent power in the demander-side distribution line 19 are improved.

In particular, in the example illustrated in FIG. 8, the reception-side device 23 such as a solar power generation system is coupled to the demander-side distribution line 19, and when the reception-side device 23 is operated, the power in the demander-side distribution line 19 is likely to fluctuate. Even in this case, as the power from the HPS 21 is supplied not only to the adjustment target electric line but also to the demander-side distribution line 19, the fluctuation of the power in the demander-side distribution line 19 is suppressed.

Further, in the description according to the present embodiment, the control server 30 causes the HPS 21 to improve the apparent power in the adjustment target electric line, but is not limited thereto.

In a case where the adjustment target electric line and the demander-side distribution line 19 have different phases, when the HPS 21 supplies the power, the power in one of the adjustment target electric line and the demander-side distribution line 19 may increase, while the power in the other one of them may decrease. More specifically, when the active current having the same phase as that of the active current in the demander-side distribution line 19 and having the opposite phase to that of the active current in the adjustment target electric line is supplied from the HPS 21, the active power in the demander-side distribution line 19 increases while the active power in the adjustment target electric line decreases. Further, when the reactive current having the opposite phase to that of the reactive current in the demander-side distribution line 19 and having the same phase as that of the reactive current in the adjustment target electric line is supplied from the HPS 21, the reactive power in the demander-side distribution line 19 decreases while the reactive power in the adjustment target electric line increases.

As described above, when the active power in the adjustment target electric line decreases or the reactive power in the adjustment target electric line increases due to the supply of power by the HPS 21, the power factor of the adjustment target electric line decreases, and therefore the apparent power in the adjustment target electric line is not improved. Even in this case, an increase in the active power in the demander-side distribution line 19 and a decrease in the reactive power in the demander-side distribution line 19 may improve the power factor of the demander-side distribution line 19 and may improve the apparent power in the demander-side distribution line 19. In other words, the control server 30 may control the supply of power from the HPS 21 to the electric line through which the power supplied from the power plant 11 passes before the power is received by the HPS 21 and does not need to adjust the apparent power in the electric line.

Furthermore, when the active current having the same phase as those of the active current in the demander-side distribution line 19 and the active current in the adjustment target electric line is supplied from the HPS 21, both the active power in the demander-side distribution line 19 and the active power in the adjustment target electric line increase. Furthermore, when the reactive current having the phase opposite to those of the reactive current in the demander-side distribution line 19 and the reactive current in the adjustment target electric line is supplied from the HPS 21, both the reactive power in the demander-side distribution line 19 and the reactive power in the adjustment target electric line decrease.

As described above, the supply of power by the HPS 21 may cause an increase in the active power in the adjustment target electric line and the active power in the demander-side distribution line 19 or may cause a decrease in the reactive power in the adjustment target electric line and the reactive power in the demander-side distribution line 19. In this case, as both the power factor of the adjustment target electric line and the power factor of the demander-side distribution line 19 are improved, and therefore both the apparent power in the adjustment target electric line and the apparent power in the demander-side distribution line 19 are improved.

Furthermore, in the description according to the present disclosure, the capacity information is information indicating the capacity of power in the electric path, but is not limited thereto.

The capacity information may be any information with which the capacity of power in the electric path is specified and does not need to be information indicating the capacity of power in the electric path. Furthermore, the capacity information may be information indicating the margin amount or may be information with which the margin amount is specified. In other words, the capacity information may be any information as long as the information relates to the capacity of power in the electric path.

Furthermore, in the description according to the present disclosure, the capability information is information indicating the maximum power that may be supplied by the AF 214 of the HPS 21, but is not limited thereto.

The capability information may be any information with which the maximum power that may be supplied by the AF 214 is specified, and does not need to be information indicating the maximum power that may be supplied by the AF 214. Furthermore, the capability information may be information indicating the adjustable amount or may be information with which the adjustable amount is specified. In other words, the capability information may be any information as long as the information relates to the capability of the HPS 21 to supply the power.

Furthermore, in the description according to the present disclosure, the adjustment amount calculation unit 308 performs control on the relation of adjustment by the HPSes 21. Here, the control on the relation of adjustment by the HPSes 21 may be the control by the adjustment amount calculation unit 308 to determine the HPS 21 that is used for the adjustment of the apparent power in the adjustment target electric line and the HPS 21 that is not used for the adjustment among the HPSes 21. Furthermore, the control on the relation of adjustment by the HPSes 21 may be the control by the adjustment amount calculation unit 308 to determine the supply amount of each of the HPSes 21. Furthermore, the control on the relation of adjustment by the HPSes 21 may be the control by the adjustment amount calculation unit 308 to determine the magnitude relation between the supply amounts of the HPSes 21.

Further, in the description according to the present disclosure, the adjustment amount calculation unit 308 of the control server 30 limits the adjustment of the apparent power in the adjustment target electric line by the HPS 21. Here, limiting the adjustment of the apparent power in the adjustment target electric line by the HPS 21 includes causing the HPS 21 to supply the power smaller than the power necessary for improving the apparent power in the adjustment target electric line. In other words, limiting the adjustment of the apparent power in the adjustment target electric line by the HPS 21 is not limited to limiting the adjustment amount compared to the result calculated by the necessary amount calculation unit 305. Furthermore, limiting the adjustment of the apparent power in the adjustment target electric line by the HPS 21 also includes preventing the HPS 21 from adjusting the apparent power in the adjustment target electric line.

Furthermore, limiting the adjustment of the apparent power in the adjustment target electric line by the HPS 21 also includes limiting the time of the adjustment of the apparent power in the adjustment target electric line by the HPS 21. An example of the time limitation includes delaying the time of adjustment of the apparent power in the adjustment target electric line by the HPS 21, as compared with the case where the adjustment of the apparent power in the adjustment target electric line by the HPS 21 is limited or not limited. Furthermore, another example of the time limitation includes shortening the time length of the adjustment of the apparent power in the adjustment target electric line by the HPS 21, as compared with the case where the adjustment of the apparent power in the adjustment target electric line by the HPS 21 is limited or not limited. In other words, limiting the adjustment of the apparent power in the adjustment target electric line by the HPS 21 includes not only limiting the adjustment amount for the adjustment target electric line but also limiting the adjustment of the apparent power in the adjustment target electric line by the HPS 21 in any manner.

Further, according to the present disclosure, the control server 30 determines the adjustment target electric line and calculates the adjustment necessary amount, but is not limited thereto.

The management server 40 may determine the adjustment target electric line and calculate the adjustment necessary amount. More specifically, the management server 40 may acquire the power information from the power sensor 10S and determine the adjustment target electric line based on the acquired power information. Further, the management server 40 may calculate the adjustment necessary amount for the adjustment target electric line based on the power information. Then, the management server 40 may transmit, to the control server 30, the information including the information indicating the calculated adjustment necessary amount and the electric line identification information for identifying the adjustment target electric line as the power information on the apparent power in the electric line.

Furthermore, in the description according to the present disclosure, the power control system 1 includes the management server 40 and the control server 30, but is not limited thereto. A single server provided in the power control system 1 may have the functions of the management server 40 and the control server 30. Furthermore, the single server may determine the adjustment target electric line, the adjustment necessary amount, the margin amount, and the adjustable amount. Further, the single server may determine the supply amount and the adjustment amount and give an instruction to the HPS 21 to adjust the apparent power in the adjustment target electric line.

In the description according to the present disclosure, the control server 30 gives an instruction to the HPS 21 to adjust the apparent power in the adjustment target electric line, but is not limited thereto. Another server different from the control server 30 may receive the instruction for adjusting the apparent power in the adjustment target electric line from the control server 30 and send the received instruction to the HPS 21.

Further, in the description according to the present disclosure, the target electric lines for the adjustment of the apparent power by the HPS 21 are the supply-side distribution line 14 and the reception-side distribution line 17, but is not limited thereto.

The target electric line for the adjustment of the apparent power by the HPS 21 may be the transmission line 12 or the demander-side distribution line 19.

Furthermore, in the description according to the present disclosure, the adjustment amount calculation unit 308 performs control on the adjustment of the apparent power in the adjustment target electric line by the HPS 21 based on the margin amounts related to the supply-side distribution line 14, the reception-side substation 16, the reception-side distribution line 17, and the power reception facility 201, respectively. Here, when the adjustment amount calculation unit 308 performs control on the adjustment by the HPS 21, the target electric path of which the margin amount is considered is not limited to the above-described electric path.

The power sensor 10S may detect the capacity information related to the transmission line 12, the supply-side substation 13, the pole transformer 18, and the demander-side distribution line 19, respectively. Further, the facility power sensor 20S may detect the capacity information on the in-facility line 202 of the power consumption facility 20. Further, the margin amount calculation unit 303 may calculate the margin amounts related to the transmission line 12, the supply-side substation 13, the pole transformer 18, the demander-side distribution line 19, and the in-facility line 202, respectively, based on the capacity information detected by the power sensor 10S and the facility power sensor 20S. Then, the adjustment amount calculation unit 308 may control the adjustment of the apparent power in the adjustment target electric line by the HPS 21 based on the margin amounts related to the supply-side substation 13, the pole transformer 18, the demander-side distribution line 19, and the in-facility line 202, respectively.

Furthermore, in the example described according to the present disclosure, the parameters such as the capacity, margin amount, adjustment necessary amount, adjustable amount, adjustment amount, supply amount, and the like, are the power, but is not limited thereto. Each parameter may be any of the parameters described above with respect to the apparent power.

Further, according to the present disclosure, the control server 30 is configured to control the HPSes 21, but is not limited thereto.

For example, the HPS 21 may have the function of the control server 30. In other words, the HPS 21 may include the CPU 31 (see FIG. 2), the ROM 32, the RAM 33, the communication device 34, and the storage device 35 to perform various functions. Furthermore, the HPS 21 may have the functions of the acquisition unit 301, the storage unit 302, the margin amount calculation unit 303, the determination unit 304, the necessary amount calculation unit 305, the extraction unit 306, the possible amount calculation unit 307, the adjustment amount calculation unit 308, the transmission unit 309, and the like, of the control server 30. Further, the HPS 21 may acquire the power information and determine the adjustment target electric line based on the acquired power information. Further, the HPS 21 may acquire the capacity information and calculate the margin amount based on the acquired capacity information. Further, the HPS 21 may calculate the adjustable amount based on the capability information. Then, the HPS 21 may control the adjustment of the apparent power in the adjustment target electric line based on the margin amount and the adjustable amount regarding each of the passing electric paths. Moreover, the HPS 21 may limit the adjustment of the apparent power in the adjustment target electric line.

Here, the embodiment described above may be considered as below.

The adjustment amount calculation unit 308 of the power control system 1 according to the present embodiment performs control on the supply of power from the HPS 21 to the adjustment target electric line, through which the power supplied from the power plant 11 passes before the power is received by the HPS 21, based on the capacity information.

In this case, the HPS 21 supplies the power to the adjustment target electric line according to the content of the adjustment based on the capacity information on the passing electric path. Therefore, as compared with the case where the HPS 21 supplies the power to the adjustment target electric line regardless of the index regarding the capacity of power in the passing electric path, the HPS 21 may supply the power to the adjustment target electric line according to the content suitable for the passing electric path.

Furthermore, the adjustment amount calculation unit 308 according to the present embodiment limits the supply of power from the HPS 21 to the adjustment target electric line based on the capacity information.

In this case, as compared with the case where the supply of power from the HPS 21 is not limited, it is possible to suppress the occurrence of a failure in the passing electric path.

Furthermore, the adjustment amount calculation unit 308 according to the present embodiment performs control based on the capacity information and the capability information.

In this case, the HPS 21 supplies the power to the adjustment target electric line according to the content based on the capability information on the HPS 21. Therefore, as compared with the case where the HPS 21 supplies the power to the adjustment target electric line regardless of the index regarding the capability of the HPS 21 to supply the power, the HPS 21 may supply the power to the adjustment target electric line according to the content of supply suitable for the HPS 21.

Further, according to the present embodiment, the electric path includes the first electric path and the second electric path provided closer to the power reception side than the first electric path. Further, the adjustment amount calculation unit 308 performs control on the supply of power from the HPS 21 to the first electric path based on the first capacity information on the capacity in the first electric path and the second capacity information on the capacity in the second electric path.

In this case, the HPS 21 supplies the power to the adjustment target electric line according to the content based on the capacity information on the electric path through which the power from the HPS 21 passes before the power is supplied to the adjustment target electric line. Therefore, as compared with the case where the power is supplied to the adjustment target electric line regardless of the index regarding the capacity of power in the passing electric path, the HPS 21 may supply the power to the adjustment target electric line according to the content suitable for the electric path through which the power from the HPS 21 passes before the power is supplied to the adjustment target electric line.

Furthermore, the adjustment amount calculation unit 308 performs control on the supply of power from the HPS 21 to the first electric path based on the condition set for the first capacity information and the condition set for the second capacity information.

In this case, the HPS 21 may supply the power to the adjustment target electric line according to the content corresponding to the index regarding the capacity of power in the first electric path and the index regarding the capacity of power in the second electric path.

Furthermore, the second electric path is provided in the power consumption facility 20 where the HPS 21 is provided. Further, the condition set for the first capacity information is set for the necessary power to be supplied to the first electric path. Further, the condition set for the second capacity information is set for the capability of the HPS 21 to supply the power.

In this case, as compared with the case where the HPS 21 supplies the power to the adjustment target electric line unconditionally with regard to the capacity of power in the passing electric path, the HPS 21 may supply the power to the adjustment target electric line according to the content suitable for the passing electric path and the HPS 21.

Furthermore, according to the present embodiment, the electric path includes the first electric path and the second electric path different from the first electric path. Further, the HPS 21 includes the first device configured to receive the power not via the second electric path but via the first electric path and the second device configured to receive the power not via the first electric path but via the second electric path. Then, the adjustment amount calculation unit 308 performs control on the relation between the supply of power by the first device and the supply of power by the second device based on the first capacity information on the capacity in the first electric path and the second capacity information on the capacity in the second electric path.

In this case, the relation between the supply of power by the first device and the supply of power by the second device is determined based on the first capacity information and the second capacity information. Therefore, as compared with the case where the relation of the supply of power is determined regardless of the index regarding the capacity of power in the passing electric path, the relation of the supply of power may be determined according to the content suitable for the passing electric path.

Further, according to the present embodiment, the adjustment amount calculation unit 308 performs control on the relation based on the first capability information on the capability of the first device to supply the power and the second capability information on the capability of the second device to supply the power.

In this case, the relation between the supply of power by the first device and the supply of power by the second device is determined based on the capability information on the HPS 21. Therefore, as compared with the case where the relation of the supply of power is determined regardless of the index regarding the adjustment capability by the HPS 21, the relation of the supply of power may be determined according to the content suitable for the HPS 21.

Furthermore, according to the present embodiment, the first electric path is provided in the power consumption facility 20 where the first device is provided, and the second electric path is provided in the power consumption facility 20 where the second device is provided.

In this case, the relation between the supply of power by the first device and the supply of power by the second device is determined based on the relation between the index regarding the capacity of power in the first electric path and the index regarding the capacity of the first device to supply the power and the relation between the index regarding the capacity of power in the second electric path and the index regarding the capacity of the second device to supply the power. Therefore, the relation of the supply of power may be determined according to the relation suitable for the index regarding the capacity of the power in the passing electric path and the index regarding the capability of the HPS 21 to supply the power.

Further, according to the present embodiment, the acquisition unit 301 acquires the reception-side capacity information on the capacity of power in the demander-side distribution line 19 provided closer to the power reception side than the HPS 21. Furthermore, the adjustment amount calculation unit 308 performs control on the supply of power from the HPS 21 to the adjustment target electric line based on the capacity information and the reception-side capacity information.

In this case, the HPS 21 supplies the power to the adjustment target electric line according to the content based on the capacity information on the demander-side distribution line 19. Therefore, as compared with the case where the HPS 21 supplies the power to the adjustment target electric line regardless of the index regarding the capacity of power in the demander-side distribution line 19, the HPS 21 may supply the power to the adjustment target electric line according to the content suitable for the demander-side distribution line 19.

Furthermore, from another viewpoint, the HPS 21 according to the present embodiment performs control on the supply of power to the adjustment target electric line, through which the power supplied from the power plant 11 passes before the power is received by the HPS 21, based on the capacity information.

Even in this case, the HPS 21 supplies the power to the adjustment target electric line according to the content based on the capacity information on the passing electric path. Therefore, as compared with the case where the HPS 21 supplies the power to the adjustment target electric line regardless of the index regarding the capacity of power in the passing electric path, the HPS 21 may supply the power to the adjustment target electric line according to the content suitable for the passing electric path.

Furthermore, each configuration described above is not limited to the above-described embodiment and may be changed without departing from the spirit. In other words, it is understood that various changes may be made to forms and details without departing from the spirit and scope of the claims.

In addition to the configuration described above, a part of each configuration described above may be omitted, or other functions may be added to each configuration described above.

Reference Signs List

1 Power control system, 10 Power system, 10S Power sensor, 11 Power plant, 14 Supply-side distribution line, 16 Reception-side substation, 17 Reception-side distribution line, 20 Power consumption facility, 21 HPS, 30 Control server, 40 Management server, and 201 Power reception facility

**Claims**

1. A power control system comprising:

    an acquisition unit that acquires capacity information on a capacity of power in an electric path through which power supplied from a power plant passes before the power is received by a device; and
    a control unit that performs control on, based on the capacity information, supply of power from the device to an electric line through which the power supplied from the power plant passes before the power is received by the device.

2. The power control system according to claim 1, wherein the control unit limits supply of power from the device to the electric line based on the capacity information.

3. The power control system according to claim 1, further comprising a capability information acquisition unit that acquires capability information on a capability of the device to supply power, wherein the control unit performs the control based on the capacity information and the capability information.

4. The power control system according to claim 1, wherein

    the electric path includes a first electric path and a second electric path provided closer to a power reception side than the first electric path, and
    the control unit performs control on supply of power from the device to the first electric path based on first capacity information on the capacity in the first electric path and second capacity information on the capacity in the second electric path.

5. The power control system according to claim 4, wherein the control unit performs control on supply of power from the device to the first electric path based on a condition set for the first capacity information and a condition set for the second capacity information.

6. The power control system according to claim 5, wherein

    the second electric path is provided in a facility where the device is provided,
    the condition set for the first capacity information is set for necessary power to be supplied to the first electric path, and
    the condition set for the second capacity information is set for a capability of the device to supply power.

7. The power control system according to claim 1, wherein

    the electric path includes a first electric path and a second electric path different from the first electric path,
    the device includes a first device configured to receive power not via the second electric path but via the first electric path, and a second device configured to receive power not via the first electric path but via the second electric path, and
    the control unit performs control on a relation between supply of power by the first device and supply of power by the second device based on first capacity information on the capacity in the first electric path and second capacity information on the capacity in the second electric path.

8. The power control system according to claim 7, further comprising a capability information acquisition unit that acquires capability information on a capability of the device to supply power, wherein the control unit performs control on the relation based on first capability information on a capability of the first device to supply power and second capability information on a capability of the second device to supply power.

9. The power control system according to claim 7, wherein

the first electric path is provided in a facility where the first device is provided, and the second electric path is provided in a facility where the second device is provided.

10. The power control system according to claim 1, wherein

the acquisition unit acquires reception-side capacity information on a capacity of power in a reception-side electric path provided closer to a power reception side than the device, and the control unit performs control on supply of power from the device to the electric line based on the capacity information and the reception-side capacity information.

11. A device comprising:

an acquisition unit that acquires capacity information on a capacity of power in an electric path through which power supplied from a power plant passes before the power is received by the device; and a control unit that performs control on, based on the capacity information, supply of power to an electric line through which the power supplied from the power plant passes before the power is received by the device.

# FIG.1

FIG.2

30, 40

```
 31                                    35
┌──────────────┐          ┌──────────────────────┐
│     CPU      │──────────│    STORAGE DEVICE    │
└──────────────┘          └──────────────────────┘

 32                                    34
┌──────────────┐          ┌──────────────────────┐
│     ROM      │──────────│    COMMUNICATION     │
│              │          │       DEVICE         │
└──────────────┘          └──────────────────────┘

 33
┌──────────────┐
│     RAM      │──────────
└──────────────┘
```

FIG.3

214

~213

~21

AF

212

POWER
CONVERSION
DEVICE

211

ADJUSTMENT
UNIT

## FIG.4

ACQUISITION UNIT — 301

STORAGE UNIT — 302

MARGIN AMOUNT CALCULATION UNIT — 303

DETERMINATION UNIT — 304

NECESSARY AMOUNT CALCULATION UNIT — 305

EXTRACTION UNIT — 306

POSSIBLE AMOUNT CALCULATION UNIT — 307

ADJUSTMENT AMOUNT CALCULATION UNIT — 308

TRANSMISSION UNIT — 309

30

## FIG.5

| SPECIFIC ELECTRIC PATH | SUPPLY SIDE | CAPACITY | MARGIN AMOUNT | POWER INFORMA-TION | THRESHOLD |
|---|---|---|---|---|---|
| 14A | — | 300 | 120 | P1 | T1 |
| 141 | 14A,14B | 150 | 60 | P2 | T2 |
| 16A | 14A,141 | 120 | 60 | | |
| 17A | 16A | 100 | 50 | P3 | T3 |
| 201A | 17A | 60 | 30 | | |
| 201B | 17A | 60 | 30 | | |
| 14B | – | 250 | 100 | P4 | T4 |
| 16B | 14B,141 | 150 | 70 | P5 | T5 |
| 17B | 16B | 130 | 80 | P6 | T6 |
| 201C | 17B | 70 | 40 | | |
| 201D | 17B | 60 | 30 | | |
| ... | ... | ... | ... | ... | ... |

FIG.6

| HPS | PASS-THROUGH ELECTRIC PATH | | ADJUSTABLE AMOUNT |
| | RECEPTION-SIDE DISTRIBUTION LINE | POWER RECEPTION FACILITY | |
| --- | --- | --- | --- |
| 21A | 17A | 201A | 10 |
| 21B | 17A | 201A | 10 |
| 21C | 17A | 201A | 10 |
| 21D | 17A | 201B | 10 |
| 21E | 17A | 201B | 10 |
| 21F | 17A | 201B | 20 |
| 21G | 17B | 201C | 10 |
| 21H | 17B | 201C | 20 |
| 21I | 17B | 201C | 20 |
| 21J | 17B | 201D | 10 |
| 21K | 17B | 201D | 10 |
| 21L | 17B | 201D | 10 |

FIG.7

```
        ┌──────────┐
        │  START   │
        └────┬─────┘
             │                        S101
        ┌────▼─────┐
  NO   ╱ ADJUSTMENT ╲
◄──────  NECESSARY?  
        ╲           ╱
             │ YES
        ┌────▼────────────┐
        │ CALCULATE ADJUSTMENT │  S102
        │ NECESSARY AMOUNT │
        └────┬────────────┘
        ┌────▼────────────┐
        │  EXTRACT HPS    │  S103
        └────┬────────────┘
        ┌────▼───────────────────────┐
        │ DETERMINE ADJUSTMENT AMOUNT AND │
        │ SUPPLY AMOUNT BASED ON      │  S104
        │ ADJUSTMENT CONDITION        │
        └────┬───────────────────────┘
             │
        ┌────▼─────┐
        │   END    │
        └──────────┘
```

# FIG.8

FIG.9

| SPECIFIC ELECTRIC PATH | SUPPLY SIDE | CAPACITY | MARGIN AMOUNT | POWER INFORMA-TION | THRESHOLD |
|---|---|---|---|---|---|
| 14A | — | 300 | 120 | P11 | T11 |
| 141 | 14A,14B | 150 | 60 | P12 | T12 |
| 16A | 14A,141 | 120 | 60 | | |
| 17A | 16A | 100 | 50 | P13 | T13 |
| 201A | 17A | 60 | 30 | | |
| 201B | 17A | 60 | 30 | | |
| 19A | 17A | 90 | 40 | P14 | T14 |
| 19B | 17A | 80 | 50 | P15 | T15 |
| 14B | — | 250 | 100 | P16 | T16 |
| 16B | 14B,141 | 150 | 70 | P17 | T17 |
| 17B | 16B | 130 | 80 | P18 | T18 |
| 201C | 17B | 70 | 40 | | |
| 201D | 17B | 60 | 30 | | |
| 19C | 17B | 110 | 70 | P19 | T19 |
| 19D | 17B | 100 | 60 | P20 | T20 |
| ... | ... | ... | ... | ... | ... |

## INTERNATIONAL SEARCH REPORT

International application No.

**PCT/JP2021/034646**

**A.    CLASSIFICATION OF SUBJECT MATTER**

*H02J 3/01*(2006.01)i; *H02J 3/16*(2006.01)i
FI:    H02J3/16; H02J3/01

According to International Patent Classification (IPC) or to both national classification and IPC

**B.    FIELDS SEARCHED**

Minimum documentation searched (classification system followed by classification symbols)

H02J3/01; H02J3/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2009-153336 A (PANASONIC ELECTRIC WORKS CO., LTD.) 09 July 2009 (2009-07-09) <br> paragraphs [0019]-[0056], fig. 1, -2 | 1-11 |
| A | JP 2017-108526 A (SEKISUI CHEMICAL CO., LTD.) 15 June 2017 (2017-06-15) <br> paragraphs [0017]-[0083], fig. 1-10 | 1-11 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 October 2021** | **30 November 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2021/034646**

| Patent document cited in search report | | | Publication date (day/month/year) | Patent family member(s) | Publication date (day/month/year) |
|---|---|---|---|---|---|
| JP | 2009-153336 | A | 09 July 2009 | (Family: none) | |
| JP | 2017-108526 | A | 15 June 2017 | (Family: none) | |

Form PCT/ISA/210 (patent family annex) (January 2015)

**EP 4 224 652 A1**

## REFERENCES CITED IN THE DESCRIPTION

### Patent documents cited in the description

- JP 2005245117 A